(19) Europäisches Patentamt
European Patent Office
Office européen des brevets

(11) Veröffentlichungsnummer : **0 142 777**
**B1**

(12) # EUROPÄISCHE PATENTSCHRIFT

(45) Veröffentlichungstag der Patentschrift : **23.12.87**

(51) Int. Cl.⁴ : **C 09 B 19/02**, D 21 H 3/82, D 06 P 1/42, C 09 B 69/00

(21) Anmeldenummer : **84113447.1**

(22) Anmeldetag : **07.11.84**

(54) **Basische Triphendioxazinfarbstoffe ihre Herstellung und Verwendung.**

(30) Priorität : **19.11.83 DE 3341886**

(43) Veröffentlichungstag der Anmeldung : **29.05.85 Patentblatt 85/22**

(45) Bekanntmachung des Hinweises auf die Patenterteilung : **23.12.87 Patentblatt 87/52**

(84) Benannte Vertragsstaaten : **CH DE FR GB LI**

(56) Entgegenhaltungen :
**EP-A- 0 084 718**
**CH-A- 356 230**
**CH-A- 390 411**
**DE-A- 3 412 668**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Harms, Wolfgang, Dr.**
**Walter-Flex-Strasse 21**
**D-5090 Leverkusen 1 (DE)**
Erfinder : **Franke, Günter, Dr.**
**Landrat-Trimborn-Strasse 60**
**D-5653 Leichlingen (DE)**
Erfinder : **Siegel, Edgar, Dr.**

**Verstorben (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Gegenstand der vorliegenden Erfindung sind basische Triphendioxazinfarbstoffe der Formel

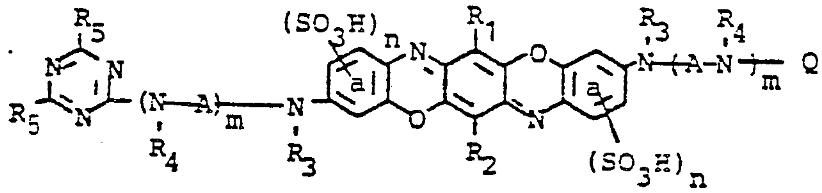

(I)

worin

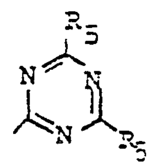

Q den Rest oder Wasserstoff,

$R_1$ und $R_2$ unabhängig voneinander Wasserstoff, Halogen, Alkyl, Aryl, Alkoxy, Aryloxy, CN, $CONH_2$, CONH-Alkyl, $CON(Alkyl)_2$, CONH-Aryl, COO-Alkyl, NH—CO-Alkyl, NH—CO-Aryl oder NH-Aryl und

$R_3$ und $R_4$ unabhängig voneinander Wasserstoff oder Alkyl bedeuten, oder

$R_3$ und $R_4$ ringgeschlossen sind,

A einen zweiwertigen, gegebenenfalls durch Sauerstoff oder Schwefel unterbrochenen Kohlenwasserstoffrest und

$R_5$ einen Rest eines Polyamins, das protoniert oder quaterniert sein kann,

bedeuten,

m 0 oder 1 und

n 0-2 bedeuten,

und worin die genannten cyclischen und acyclischen Substituenten ihrerseits durch in der Farbstoffchemie übliche nichtionische, kationische oder anionische Reste substituiert sein können, und die Ringe a durch in der Farbstoffchemie übliche nichtionische Reste substituiert sein können, mit der Maßgabe, daß die Summe der anionischen Gruppen kleiner ist als die Summe der protonierbaren oder quaternierbaren Stickstoffatome in $R_5$ ihre Herstellung, ihre wäßrige Lösungen und ihre Verwendung zum Färben von mit basischen Farbstoffen färbbaren Substraten, insbesondere Papier.

Aus EP-A-0 084 718, CH-A-390 411 und CH-A-356 230 sind Triphendioxazin-Farbstoffe bekannt, die durch nichtbasische Aminotriazin-Gruppen substituiert sind und Sulfonsäure-gruppen tragen können. Bei den sulfonsäuregruppenfreien Farbstoffen handelt es sich um Pigmente. Die sauren Farbstoffe sind ebenso wie die Farbstoffe der vorliegenden Erfindung wasserlöslich und beispielsweise zum Färben von Papier geeignet. Gegenüber den bekannten sauren Farbstoffen zeichnen sich die neuen basischen Farbstoffe durch einen hohen Aufziehgrad auf Papier aus.

Unter einem gegebenenfalls protonierten oder quaternierten Polyaminrest $R_5$ werden vorzugsweise Di-, Tri- und Tetramin-Reste und insbesondere Reste der Formeln

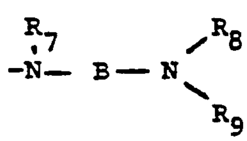

(II)

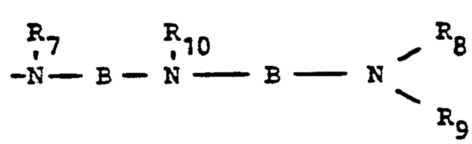

(III)

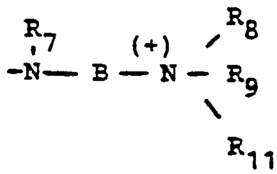 $X^{(-)}$ (IV)

und

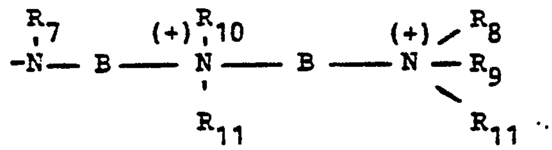 $2X^{(-)}$ (V)

verstanden, worin

$R_7$-$R_{10}$ Wasserstoff oder Alkyl und

$R_{11}$ Wasserstoff, Alkyl oder Aralkyl bedeuten, oder

$R_7$ mit $R_8$ oder $R_7$ mit $R_{10}$ oder $R_8$ mit $R_{10}$ oder $R_8$ mit $R_9$ oder $R_8$ mit $R_9$ und $R_{11}$ zu einem Ring geschlossen sind,

B für gegebenenfalls verzweigtes $C_2$-$C_6$-Alkylen, Cyclohexylen, Phenylen oder einen Rest der Formeln

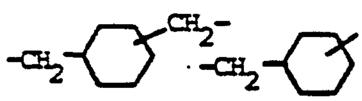 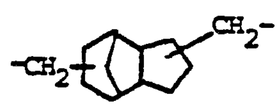 oder

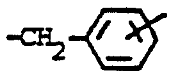 und

$X^{(-)}$ für ein Anion stehen,

und worin die genannten cyclischen und acyclischen Reste ihrerseits durch in der Farbstoffchemie übliche nichtionische oder kationische Reste substituiert sein können.

In Formel (I) stehen $R_1$ und $R_2$ vorzugsweise für Halogen und insbesondere für Chlor.

In den Formeln (I)-(V) ist unter einem Alkylrest vor allem ein Rest 1-4 Kohlenstoffatomen zu verstehen.

Aryl bzw. Aralkyl stehen vorzugsweise für Phenyl bzw. Benzyl oder Phenylethyl.

Als nichtionische Substituenten kommen z. B. in Betracht: Halogen wie Fluor, Chlor oder Brom, Hydroxy, $C_1$-$C_4$-Alkoxy, Cyan, $C_1$-$C_4$-Alkyl oder Amino.

Als kationischer Substituent kommt vor allem die Ammoniumgruppe und als anionischer Substituent die Sulfatogruppe in Frage.

Bevorzugt sind jedoch nichtionische und kationische Substituenten. Der Rest A steht beispielsweise für gegebenenfalls verzweigtes Alkylen mit 2-6 C-Atomen, das durch 0 oder S unterbrochen oder durch OH substituiert sein kann, oder für die Reste

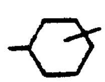 ,

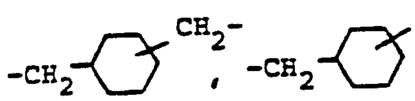 , 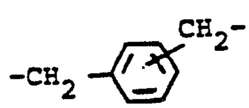

oder 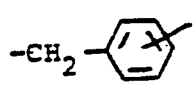

die durch $C_1$-$C_4$-Alkyl substituiert sein können.

Es können die Reste

$R_3$ und $R_4$ zusammen mit —N—A—N—,

$R_7$ und $R_8$ zusammen mit —N—B—N—,

$R_7$ und $R_{10}$ zusammen mit —N—B—N— oder

$R_8$ und $R_{10}$ zusammen mit —N—B—N— einen 5- oder 6-gliedrigen Ring, z. B. einen Piperazin- oder Imidazolidin-Ring bilden.

Die Reste $R_8$ und $R_9$ bzw. die Reste $R_8$, $R_9$ und $R_{11}$ können zusammen mit N einen 5- oder 6-

gliedrigen Ring, z. B. einen Piperidin-, Morpholin-, Piperazin- oder Pyrrolidin-Ring bzw. Pyridin-Ring bilden.

Die genannten Heterocyclen können weitere Substituenten wie $C_1$-$C_4$-Alkylreste tragen oder einen ankondensierten Ring, z. B. einen Benzolring tragen.

Als Anionen $X^{(-)}$ sind :

Chlorid, Bromid, Jodid, Sulfat, Hydrogensulfat, Methylsulfat, Ethylsulfat, Amidosulfonat, Perchlorat, Phosphat, Hydroxid, Formiat, Acetat, Propionat, Oxalat, Malonat, Succinat, Maleinat, Chloracetat, Trichloracetat, Methoxyacetat, Ethoxyacetat, Lactat, Citrat, Benzoat, Methansulfonat, Ethansulfonat, Benzolsulfonat, p-Toluolsulfonat und Carbonat besonders zu nennen.

Beispiele für $R_1$ und $R_2$ sind :

Wasserstoff, Chlor, Brom, $C_1$-$C_4$-Alkyl, Phenyl, Chlorphenyl, Methylphenyl, $C_1$-$C_4$-Alkoxy, Acetylamino, Propionylamino, Butyrylamino, Benzoylamino, Methylbenzoylamino, Chlorbenzoylamino, Phenoxy, Chlorphenoxy, Methylphenoxy, Anilinocarbonyl, Toluidinocarbonyl, Chloranilinocarbonyl, Methoxycarbonyl und Ethoxycarbonyl. Reste $R_3$ und $R_4$ sind außer Wasserstoff beispielsweise $C_1$-$C_4$-Alkyl, β-Hydroxyethyl oder β-Sulfatoethyl.

Als Alkylenreste A seien genannt Ethylen, 1,2-Propylen, 1,3-Propylen, 1,4-Butylen, 1,3-Butylen, 2,3-Butylen, 2-Methyl-1,3-propylen, 2-Hydroxy-1,3-propylen, 1,5-Pentylen, 1,6-Hexylen, 2,5-Hexylen, $-CH_2-CH_2-O-CH_2-CH_2-$, $-CH_2-CH_2-S-CH_2-CH_2-$, 2,2-Dimethylpropylen, 2-Methyl-2,4-pentylen, 1,2-, 1,3- und 1,4-Cyclohexylen, 4-Methyl-1,3-Cyclohexylen.

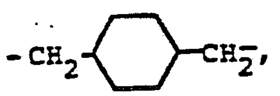, 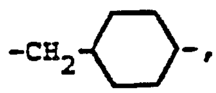, 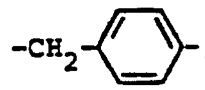, 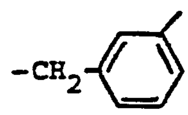

Beispiele für $R_5$ sind :

2-Dimethylamino-1-ethylamino, 2-Diethylamino-1-ethylamino, 2-(β-Hydroxyethylamino)-1-ethylamino, 2-Bis-(β-hydroxyethyl)-amino-1-ethylamino, N-(2-Dimethylamino-1-ethyl)-N-methylamino, 2-Methylamino-1-ethylamino, N-(2-Ethylamino-1-ethyl)-N-ethylamino, 3-Dimethylamino-1-propylamino, 3-Diethylamino-1-propylamino, 3-Methylamino-1-propylamino, 3-Ethylamino-1-propylamino, 3-(β-Hydroxyethylamino)-1-propylamino, 3-Bis-(β-hydroxyethyl)-amino-1-propylamino, 3-(N-Methyl-N-β-hydroxyethyl)-amino-1-propylamino, 5-Dimethylamino-2-pentylamino, 5-Diethylamino-2-pentylamino, 2-Amino-1-ethylamino, 3-Amino-1-propylamino, 4-Amino-1-butylamino, 5-Amino-1-pentylamino, 6-Amino-1-hexylamino, 3-Amino-2-hydroxy-1-propylamino, 2-(N-Morpholino-1-ethylamino, 2-(N-Piperazinyl)-1-ethylamino bzw. N-(N'-2-Aminoethyl)-piperazino, 2-[N-(N'-Methyl)-piperazinyl]-1-ethylamino, 2-(N-Piperidinyl)-1-ethylamino, 3-(N-Piperazinyl)-1-propyl-amino, bzw. N-(N'-3-Aminopropyl)-piperazino, 3-[N-(N'-methyl)piperazinyl]-1-propylamino, 3-(N-Morpholino)-1-propylamino, Piperazinyl, N-Methyl-N'-piperazinyl, N-Ethyl-N'-piperazinyl, 3-(N-Piperidinyl)-1-ethylamino, 3-(N-Pyrrolidinyl)-1-propylamino, 2-(N-Pyrrolidinyl)-1-ethylamino, N-(β-Hydroxyethyl)-N'-piperazinyl, 4-Amino-1-cyclohexylamino, 3-Amino-1-cyclohexylamino, 4-, 3-, 2-Dimethylaminophenylamino, 4-(β-Diethylaminoethoxy)-phenylamino, 4-N-(3'-Dimethylamino-1'-propylamino)-phenylamino, 4-N-(2'-Dimethylamino-1'-ethylamino)-phenylamino, 3-(N-Methyl-N-γ-aminopropyl)-1-propylamino, ferner die Reste von Diethylentriamin, Triethylentetramin, Tetraethylenpentamin, Pentaethylenhexamin, Dipropylentriamin, Tripropylentetramin, und die Reste

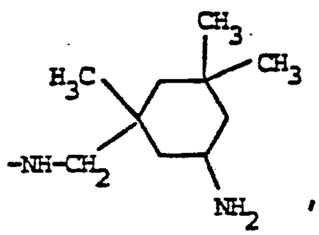, 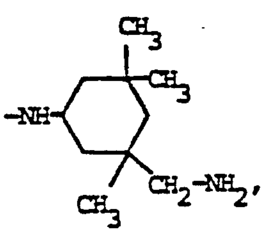,

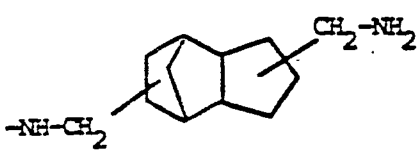 und 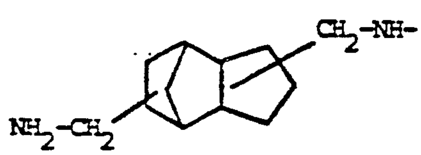

sowie die Ammoniumsalze dieser Amine, die als vierten Rest am Stickstoff beispielsweise eine $C_1$-$C_4$-Alkylgruppe, Hydroxyethyl, Hydroxypropyl, Dihydroxypropyl, Methoxycarbonyl-ethyl oder Benzyl tragen.

Von den Farbstoffen der Formel (I) sind die der Formel

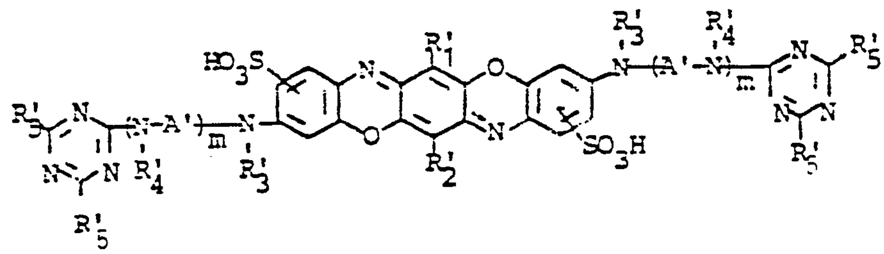 (VI)

bevorzugt, worin

$R_1'$ und $R_2'$ Wasserstoff, Halogen,

$R_3'$ und $R_4'$ Wasserstoff oder $C_1$-$C_4$-Alkyl, das durch OH oder Sulfato substituiert sein kann, und

A' gegebenenfalls verzweigtes $C_2$-$C_6$-Alkylen, das durch O oder S unterbrochen oder durch OH substituiert sein kann, oder die Reste

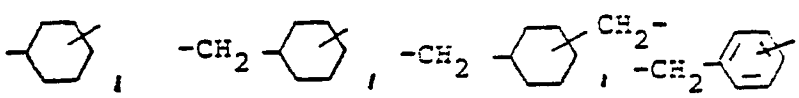

die durch $C_1$-$C_4$-Alkyl substituiert sein können, bedeuten oder

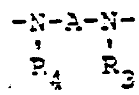

für gegebenenfalls durch $C_1$-$C_4$-Alkyl substituiertes Piperazin steht,

$R_5'$ einen Rest der Formeln

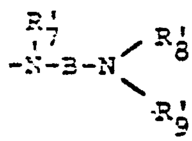 , 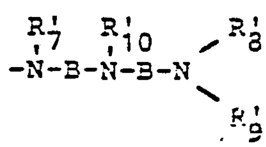

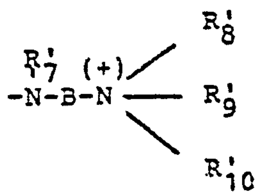 $X^{(-)}$ oder 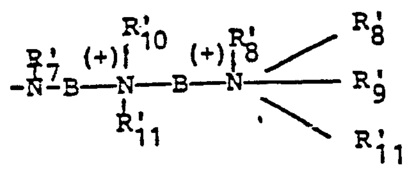

$2\ X^{(-)}$

$R_7'$-$R_{11}'$ Wasserstoff, gegebenenfalls durch Hydroxy, $C_1$-$C_4$-Alkoxy, Halogen, Cyan, $C_1$-$C_4$-Alkoxycarbonyl oder $C_1$-$C_4$-Alkylcarbonyl substituiertes $C_1$-$C_4$-Alkyl und

$R_{11}'$ außerdem gegebenenfalls durch $C_1$-$C_4$-Alkyl, Hydroxy, $C_1$-$C_4$-Alkoxy oder Halogen substituiertes Benzyl oder Phenylethyl, und

B $C_2$-$C_6$-Alkylen, Cyclohexylen, Phenylen oder einen gegebenenfalls durch $C_1$-$C_4$-Alkyl substituierten Rest der Formeln

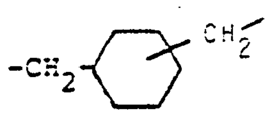 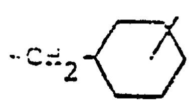 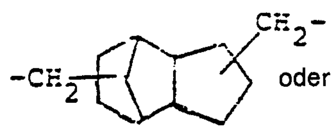 oder

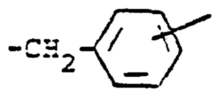 bedeuten oder

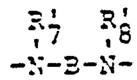 oder 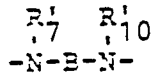 oder 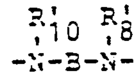

einen gegebenenfalls durch $C_1$-$C_4$-Alkyl substituierten Piperazin oder Imidazolidin-Ring darstellen, oder $R_8'$—N—$R_9'$ einen gegebenenfalls durch $C_1$-$C_4$-Alkyl substituierten Piperidin-, Morpholin-, Piperazin- oder Pyrrolidin-Ring oder

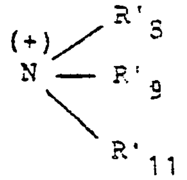

einen gegebenenfalls durch $C_1$-$C_4$-Alkyl substituierten Pyridinium-Rest und

$X^{(-)}$ ein Anion darstellen, und

m 0 oder 1 bedeutet.

In bevorzugten Farbstoffen der Formel (VI) stehen $R_1'$ und $R_2'$ für Chlor, $R_3'$ und $R_4'$ für Wasserstoff oder $C_1$-$C_4$-Alkyl.

Besonders hervorzuheben sind Farbstoffe der Formel

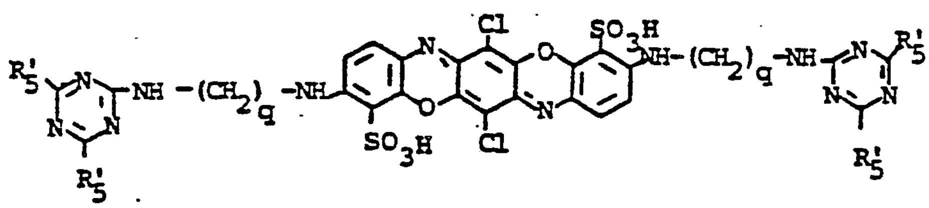 (VII)

worin

$R_5'$ die oben angegebene Bedeutung hat und

q für 2, 3 oder 4 steht.

und Farbstoffe der Formel

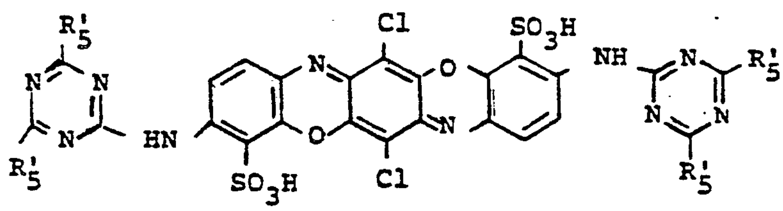 (VIII)

Von diesen sind wiederum solche der Formel (VII) bzw. (VIII) besonders zu nennen, worin

q für 2 oder 3,

$R_5'$ für $—NH—(CH_2)_3—N(R_{12}')_2$

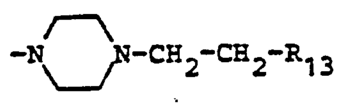 oder

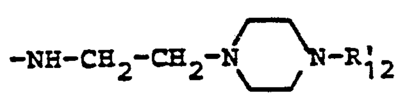

$R_{12}'$ für Wasserstoff, Methyl oder Ethyl und

$R_{13}$ für OH oder $N(R_{12}')_2$ stehen,

und insbesondere deren durch Umsetzung mit den Quaternierungsmitteln

$$R_{11}'—X \qquad (IX)$$

worin $R_{11}'$ für Wasserstoff, Methyl oder Ethyl und X für einen als Anion $X^{(-)}$ abspaltbaren Rest steht, erhaltenen Salze.

Die Herstellung der Farbstoffe (I) erfolgt durch Kondensation von Farbbasen der Formel

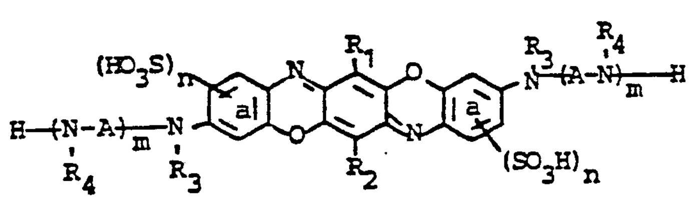 (X)

worin $R_1$, $R_2$, $R_3$, $R_4$, A, m und n die oben angegebene Bedeutung haben, mit Trihalogentriazinen der Formel

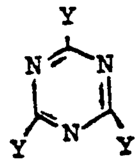

(XI)

worin Y = F, Cl, Br zu Verbindungen der Formel

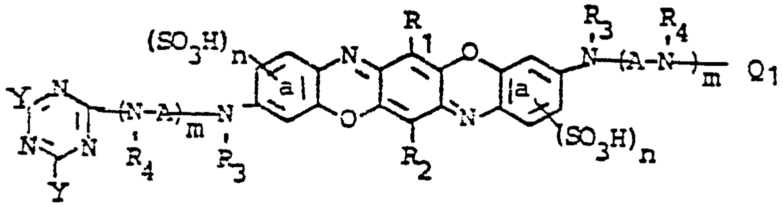

(XII)

worin $R_1$, $R_2$, $R_3$, $R_4$, A, Y, m und n die oben gegebene Bedeutung haben, und $Q_1$ für Wasserstoff oder den Rest

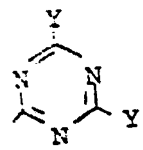

steht, und deren unter Halogenwasserstoffabspaltung erfolgende weitere Umsetzung mit Verbindungen der Formel

$$R_5{-}H \qquad (XIII)$$

worin $R_5$ die oben angegebene Bedeutung hat.

Ein alternatives Verfahren für Verbindungen der Formel (I) besteht in der Kondensation von Farbbasen der Formel (X) mit substituierten Dihalogentriazinen der Formel

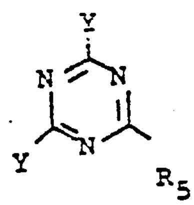

(XIV)

worin $R_5$ und Y die oben angegebene Bedeutung haben, zu Verbindungen der Formel

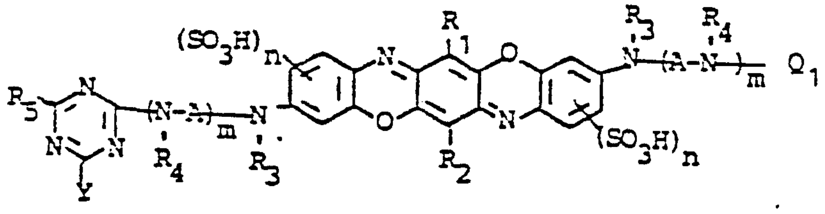

(XV)

worin $R_1$, $R_2$, $R_3$, $R_4$, $R_5$, A, Y, $Q_1$, m und n die oben angegebene Bedeutung haben und deren Kondensation mit Verbindungen der Formel (XIII).

Die Herstellung von Triphendioxazin-Verbindungen der Formel (X) kann beispielsweise durch Kondensationsreaktionen von substituierten Benzochinonen mit gegebenenfalls entsprechend substituierten 1,4-Phenylendiaminen bzw. deren Sulfonsäuren und anschließenden Ringschluß der erhaltenen Kondensationsprodukte nach Methoden erfolgen, wie sie in den DE-A-2 122 262, 2 124 080, 2 503 611 und 2 823 828 beschrieben sind. Weiterhin kann man Nitroaminophenole mit substituierten Benzochinonen umsetzen, wie in der Deutschen Patentschrift 620 346 beschrieben ist, und in den entstandenen Nitrotriphendioxazinen die Nitro- zu Aminogruppen reduzieren.

Die Kondensation der Farbbasen (X) mit den Trihalogentriazinen (XI) wird in wässrigem oder wässrigorganischem Medium bei Temperaturen von 0-40 °C, vorzugsweise 0-20 °C, und pH-Werten von 3-10 in Gegenwart alkalischer Kondensationsmittel wie wässriger Alkalihydrogencarbonat-, Alkalicarbonat-, Alkalihydroxid- oder Alkaliphosphatlösung durchgeführt ; oder aber die Kondensation wird in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylaminen, N,N-Dialkylanilinen, Pyridin oder Alkylpyridinen bei Temperaturen von 0-20 °C vollzogen.

Der Austausch der Halogenatome in den Verbindungen (XII) und (XV) kann selbstverständlich auch in Überschüssen der Komponente (XIII) in Gegenwart oder Abwesenheit von Wasser oder organischen Lösungsmitteln bewirkt werden.

Die auf den gezeigten Wegen erhaltenen basischen Farbstoffe werden zur Anwendung direkt oder gegebenenfalls nach vorheriger Isolierung in den verdünnten Säuren gelöst oder sie werden mit Quaternierungsmitteln (IX) in Wasser, wässrig-organischen oder organischen Lösungsmitteln quaternisiert und gegebenenfalls zwecks anschließender Herstellung rein wässriger Lösungen isoliert.

Die neuen basischen Farbstoffe können in protonierter oder quaternisierter Form als gut wasserlösliche Produkte aus wässriger Lösung zum Färben von verschiedensten Materialien wie Cellulosematerialien, Polyacrylnitril, sauer modifiziertem Polyamid und Polyester, Wolle und Leder Verwendung finden.

Hervorragend geeignet sind die erfindungsgemäßen Farbstoffe vor allem zum Färben von verschiedensten Papierarten in klaren, blauen bis violetten Tönen.

Beim Färben werden hohe Ausziehgrade erreicht, erkenntlich an der geringen Abwasserbelastung mit Farbstoff. Die Färbungen weisen gute bis sehr gute Licht- und Naßechtheiten auf. Sie sind gegen Einwirkung von Wasser, Alkoholen, Seifen oder wässrigen organischen Säuren sehr beständig.

## Beispiel 1

12,0 g einer Triphendioxazin-Komponente der Formel

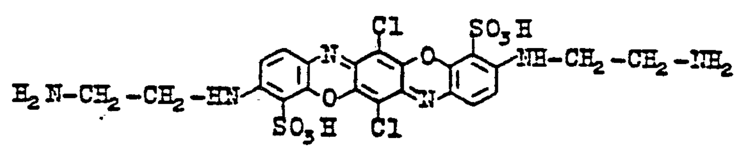

werden in 180 ml Wasser bei pH 11,5 gelöst. Man setzt 120 ml Aceton hinzu und stellt den pH-Wert auf 10,5.

Eine Lösung von 8,4 g Cyanurchlorid in 80 ml Aceton wird auf 80 g Eis gegeben. Zu der erhaltenen Cyanurchlorid-Suspension läßt man bei 0 bis 6 °C die Lösung der Triphendioxazin-Komponente zutropfen und hält dabei den pH-Wert durch Regulierung der Zutropfgeschwindigkeit und Zugabe von 1 n Natronlauge auf 8,5. Man rührt etwa 2 Stunden weiter, bis die Kondensation beendet ist. Man erwärmt auf Raumtemperatur, salzt das Kondensationsprodukt mit Natriumchlorid aus, saugt die Fällung ab und wäscht den Filterkuchen mit 10 %iger Natriumchloridlösung.

Das erhaltene Produkt wird in eine Lösung von 29,0 g 3-Dimethylamino-1-aminopropan in 180 ml Wasser eingetragen. Man erwärmt 1 Stunde auf 50° und erhitzt anschließend noch 4 Stunden auf 75 bis 80°. Die erhaltene Lösung wird abgekühlt. Man fällt das entstandene Produkt durch Zusatz von 25 %iger Natriumchloridlösung aus, saugt es ab, wäscht den Filterkuchen mit 20 %iger und dann mit 15 %iger Natriumchloridlösung und trocknet ihn.

Erhalten wird ein Farbstoff der Formel (VII), in der

$q = 2$ und $R_5' = —NH—CH_2—CH_2—CH_2—N(CH_3)_2$ ist
$\lambda_{max} = 637$ nm in 5 %iger Essigsäure.

Zum Färben von Papier wird das Produkt in 10 %iger Essigsäure gelöst. Die in klaren Blautönen gefärbten Papiere weisen eine sehr gute Lichtechtheit und ausgezeichnete Naßechtheiten auf. C.I. Indicator Number 14.

## Beispiel 2

10,0 g Triphendioxazin-Verbindung der Formel

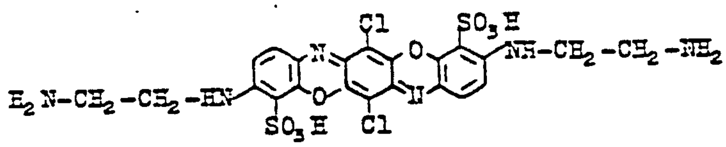

werden in 400 ml Wasser mit 34 ml 1n Natronlauge gelöst. Diese Lösung wird zu einer Suspension von 10,5 g Cyanurchlorid in 140 ml Wasser und 1,0 g eines Emulgators (auf der Basis von Laurylalkohol und Ethylenoxid) bei 0 bis 5° so zugetropft, daß sich ein pH-Wert von 8,5 bis 8,8 einstellt. Nach dem Eintropfen wird der pH-Wert weiter durch Zutropfen von In Natronlauge in den oben angegebenen Grenzen gehalten, bis die Kondensation nach mehreren Stunden beendet ist. Zu der feinteiligen Suspension des Kondensationsproduktes setzt man nun 20,0 g 2-Aminoethylpiperazin und erwärmt Mischung zunächst 2 Stunden auf 60°, dann 5 Stunden auf 95°. Man kühlt ab, salzt das teilweise ausgefallene Produkt mit Natriumchlorid vollständig aus, saugt es ab und wäscht den Filterkuchen mit konzentrierter und dann mit 10 %iger Natriumchloridlösung.

Die erhaltene Verbindung entspricht der Formel (VII) mit

q = 2 und $R'_5$ = 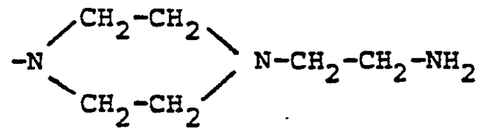

$\lambda_{max}$ = 641 nm in 5 %iger Essigsäure

Der Farbstoff wird zur Färbung von Papier in verdünnter Essigsäure gelöst. Er ergibt auf Papier blaue Färbungen mait ausgezeichneten Naßechtheiten. Beim Färbeprozeß auf geleimtem und ungeleimtem Papier werden hohe Ausziehgrade erreicht. C.I. Indicator Number 14.

Beispiel 3

12,0 g Triphendioxazin-Komponente des Beispiels 1 werden mit 8,4 g Cyanurchlorid umgesetzt und anschließend das Bis-(dichlortriazinyl)-Kondensationsprodukt isoliert wie dort beschrieben. Der erhaltene Filterkuchen wird in eine Mischung von 23,0 g 2-Hydroxyethylpiperazin und 250 ml Wasser eingetragen. Man erwärmt die Mischung zunächst 1 Stunde auf 50° und anschließend 3 Stunden auf 95 bis 100°. Nach Abkühlung wird das in Nadeln zum Teil auskristallisierte Reaktionsprodukt durch Zutropfen von 25 %iger Natriumchloridlösung möglichst weitgehend ausgesalzen, abgesaugt, mit verdünnter Natriumchloridlösung gewaschen und getrocknet.

Das erhaltene Produkt entspricht der Formel (VII) mit

q = 2 und $R'_5$ = 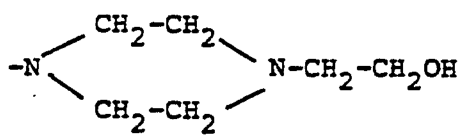

$\lambda_{max}$ = 635 nm in 5 %iger Essigsäure.

Zum Färben von Papier wird das Produkt in verdünnter Essigsäure gelöst. Mit einer solchen Lösung läßt sich Papier in brillanten neutralen Blautönen färben. Die Färbungen weisen hervorragende Lichtechtheiten und gute Naßechtheiten auf. Geringe Färbung des Abwassers nach dem Färbeprozeß zeigt hohe Affinität des Farbstoffes zur Cellulosemasse an. C.I. Indicator Number 14.

Beispiel 4

Setzt man in Beispiel 2 an Stelle der dortigen Triphen-dioxazin-Komponente 10,4 g folgender Verbindung ein

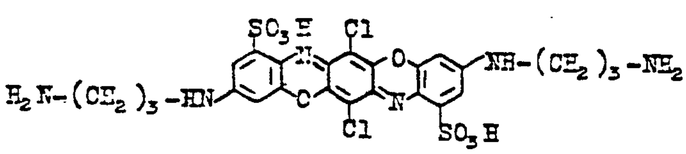

und verfährt im übrigen völlig analog, so erhält man ein Produkt der Formel (III) mit

q = 3 $R'_5$ = 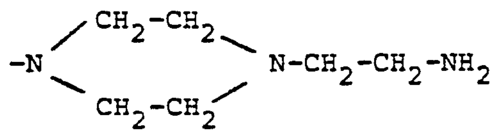

$\lambda_{max}$ = 639 nm in 5 %iger Essigsäure

das ebenso in schwach saurer Lösung Verwendung zum Färben von Papier in klaren Blautönen findet. Auch mit diesem Produkt werden ausgezeichnete Naßechtheiten des gefärbten Papiers und hohe Ausziehgrade erreicht. C.I. Indicator Number 14.

Analog zu den Beispielen 1 bis 3 kann man weiterhin die in Tabelle I, Spalte 2, aufgeführten Triphendioxazin-Komponenten mit 2 Mol Cyanurchlorid Kondensieren und die erhaltenen Zwischenprodukte mit 4 Mol Amin der Spalte 3 umsetzen, wobei in allen Fällen basische, in schwachen Säuren lösliche blaue Farbstoffe der Formel (I) erhalten werden. Cl. Indicator Number 14.

(Siehe Tabelle I Seite 11 ff.)

Tabelle I

| Beispiel Nr. | Triphendioxazin-Komponente | Amin |
|---|---|---|
| 5 | 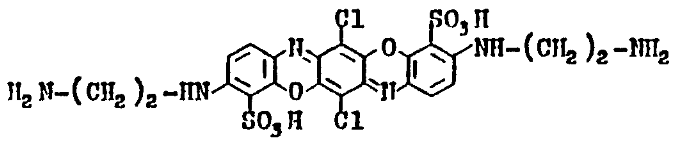 | 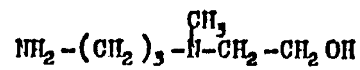 |
| 6 | " | $NH_2-(CH_2)_3-N(CH_2-CH_2OH)_2$ |
| 7 | " | 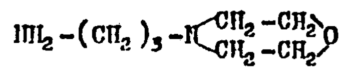 |
| 8 | " | 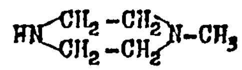 |
| 9 | " | $H_2N-(CH_2)_3-N(C_2H_5)_2$ |
| 10 | " | 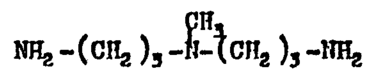 |
| 11 | " | $NH_2-(CH_2)_2-N(C_2H_5)_2$ |
| 12 | " | $NH_2-(CH_2)_2-N(CH_2-CH_2OH)_2$ |
| 13 | " | $NH_2-(CH_2-CH_2-NH)_2-CH_2-CH_2-NH_2$ |
| 14 | " | 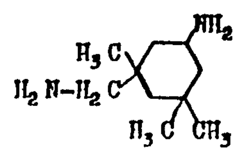 |

Tabelle I (Fortsetzung)

| Beispiel Nr. | Triphendioxazin-Komponente | Amin |
|---|---|---|
| 15 | 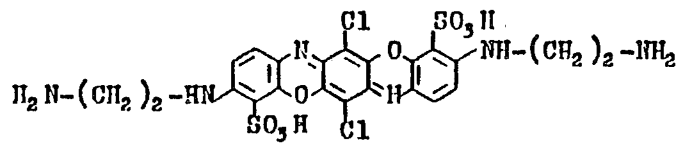 | 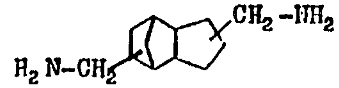 |
| 16 | " | 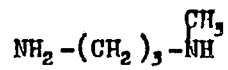 |
| 17 | " | 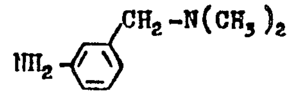 |
| 18 | 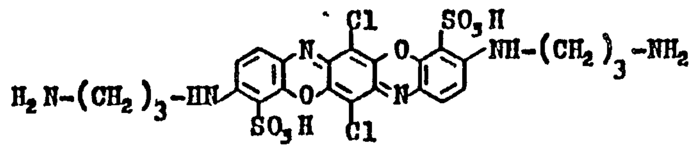 | $NH_2-(CH_2)_3-N(CH_3)_2$ |
| 19 | " | $NH_2-(CH_2)_3-N(C_2H_5)_2$ |
| 20 | " | 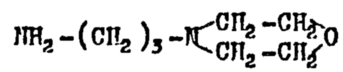 |
| 21 | " | 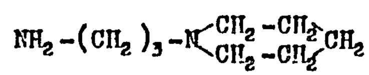 |
| 22 | " | $NH_2-(CH_2)_2-N(CH_3)_2$ |
| 23 | " | 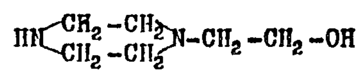 |
| 24 | " | 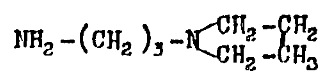 |

Tabelle I (Fortsetzung)

| Beispiel Nr. | Triphendioxazin-Komponente | Amin |
|---|---|---|
| 25 | 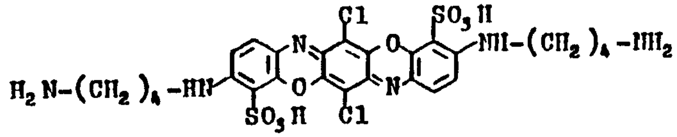 | 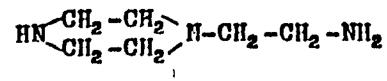 |
| 26 | " | $H_2N-(CH_2)_3-N(CH_3)_2$ |
| 27 | " | $H_2N-(CH_2)_3-N(C_2H_5)_2$ |
| 28 | " | 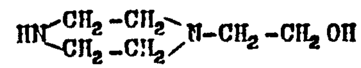 |
| 29 | 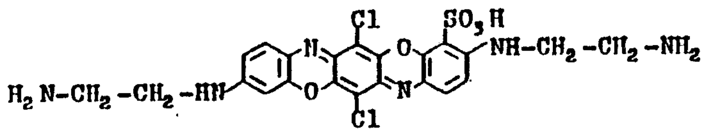 | $H_2N-(CH_2)_3-N(CH_3)_2$ |
| 30 | " | 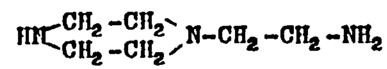 |
| 31 | 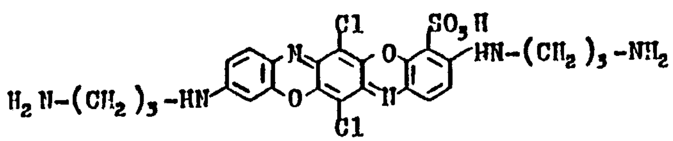 | 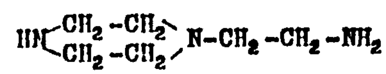 |

Tabelle I (Fortsetzung)

| Beispiel Nr. | Triphendioxazin-Komponente | Amin |
|---|---|---|
| 32 | 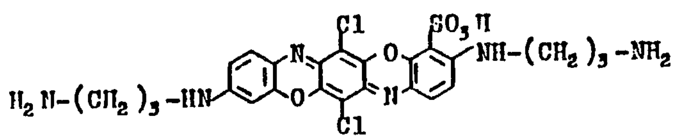 | 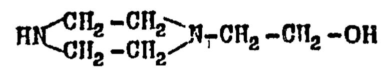 |
| 33 | " | $NH_2-(CH_2)_3-N(CH_3)_2$ |
| 34 | 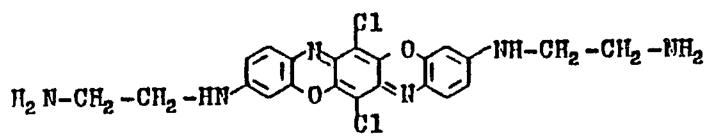 | $NH_2-(CH_2)_3-N(C_2H_5)_2$ |
| 35 | " | 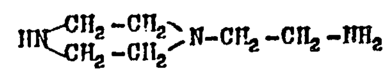 |
| 36 | 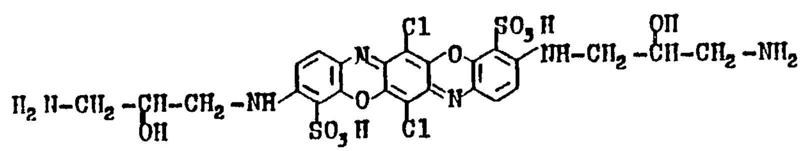 | $NH_2-(CH_2)_2-N(CH_3)_2$ |
| 37 | 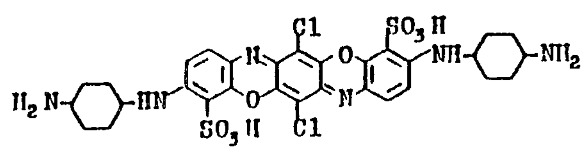 | $NH_2-(CH_2)_3-N(CH_2-CH_2OH)_2$ |

Tabelle I (Fortsetzung)

| Beispiel Nr. | Triphendioxazin-Komponente | Amin |
|---|---|---|
| 38 | 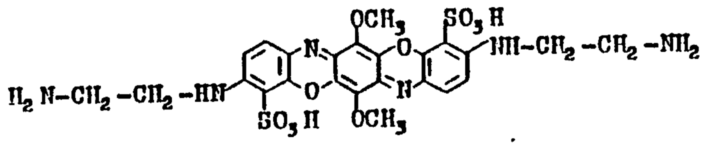 | 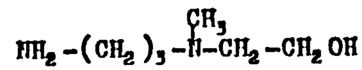 |
| 39 | 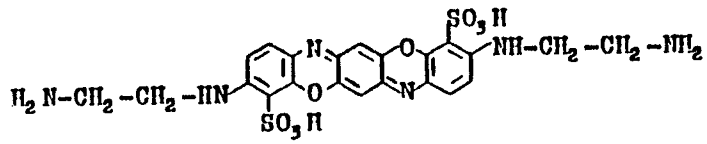 | 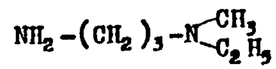 |
| 40 | 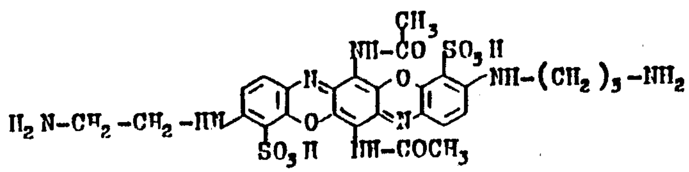 | 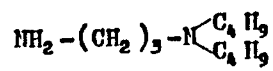 |
| 41 | 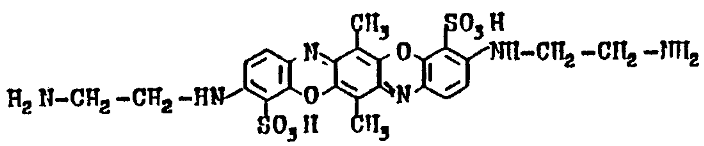 | 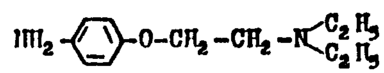 |
| 42 | 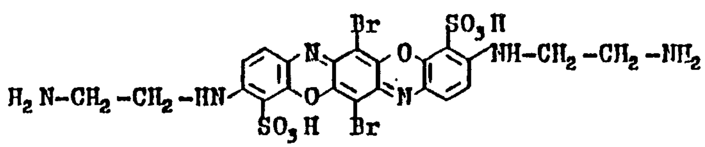 | $NH_2-(CH_2)_3-N(CH_3)_2$ |
| 43 | 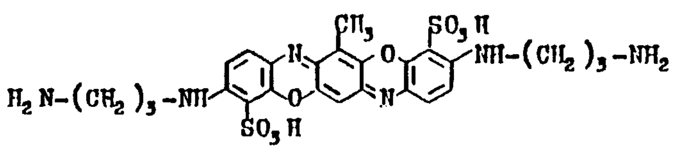 | $NH_2-(CH_2)_3-N(C_2H_5)_2$ |

Beispiel 44

15,8 g Farbbase der Formel

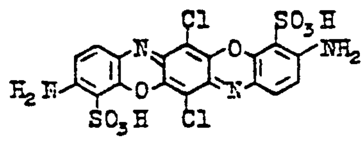

werden in 1 400 ml Wasser durch Einstellen eines pH-Wertes von 7 gelöst. Zu der Lösung setzt man 1,6 g eines Emulgators, der auf Basis Laurylalkohol und Ethylenoxid hergestellt ist. Man gibt zu der Lösung bei 20° 16,4 g Cyanurchlorid in 15 Minuten zu und hält den pH-Wert mit 2n Sodalösung auf 5,0 bis 5,5. Nach etwa 4 Stunden ist die Kondensation beendet und eine feine Suspension entstanden. Man setzt 40 g 2-Aminoethylpiperazin zu der Suspension und erwärmt die Mischung zunächst 2 Stunden auf 75 bis 80°, anschließend 4 Stunden auf 90 bis 95°. Man läßt abkühlen, salzt den teilweise ausgefallenen Farbstoff mit Natriumchlorid vollends aus, saugt ihn ab und wäscht ihn mit Natriumchloridlösung.

Man erhält einen Farbstoff der Formel (I), in der
$R_1$, $R_2$ = Cl, $R_3$ = H, m = 0, n = 1 und

$R_5$, $R_6$ = 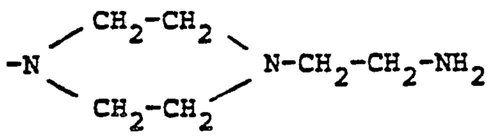

$\lambda_{max}$ = 617 nm in 5 %iger Essigsäure

Blaue Papierfärbungen werden mit diesem Farbstoff erhalten, wenn man eine Lösung des erhaltenen Produktes in 10 %iger Essigsäure zu einer Suspension von gebleichtem Zellstoff setzt, 15 Minuten bei 20° verrührt und mit der gefärbten Masse auf einem Blattbildner Papierblätter herstellt. Die nur schwache Färbung der Abwässer zeigt hohe Ausziehgrade an. Die Naßechtheiten der gefärbten Papiere sind vorzüglich. C.I Indicator Number 14.

Beispiel 45

10,0 g Farbbase der Formel

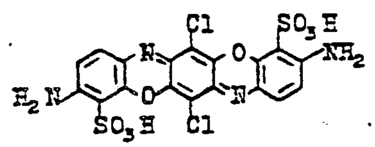

werden in 700 ml Wasser bei pH 7 bis 8 gelöst. Die Lösung läßt man zu einer Suspension von Cyanurchlorid tropfen, die durch Lösen von 8,2 g Cyanurchlorid in 80 ml Aceton und Eingießen in 80 ml Eis-Wasser hergestellt war. In dem Reaktionsgemisch wird die Temperatur auf 0 bis 5° und der pH-Wert mit 1n Sodalösung auf 5,0 bis 5,5 gehalten. Ist die Umsetzung nach einigen Stunden beendet, saugt man das ausgefallene Kondensationsprodukt ab und trägt es in eine Mischung von 10,0 g 3-Dimethylamino-1-propylamin und 200 ml Wasser ein. Die Mischung wird nun zunächst 2 Stunden auf 45 bis 50° und anschließend 5 h auf 75 bis 80° erwärmt. Man kühlt die erhaltene Lösung ab, salzt entweder den Farbstoff mit Natriumchlorid aus, saugt ihn ab und trocknet ihn oder man dampft die erhaltene Lösung im Rotationsverdampfer in Vakuum ein. In beiden Fällen fällt ein dunkelblaues Pulver an.

Man erhält einen Farbstoff der Formel (I), in dem
$R_1$, $R_2$ = Cl, $R_3$ = H, m = 0, n = 1 und
$R_5$, $R_6$ = $-NH-CH_2-CH_2-CH_2-N(CH_3)_2$ ist.

Beispiel 46

Das in gleicher Weise wie im Beispiel 45 erhaltene Kondensationsprodukt der Formel

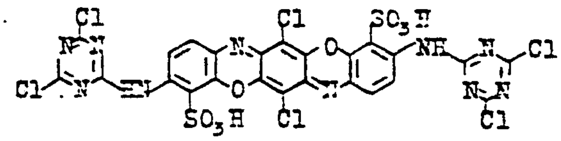

wird wie dort beschrieben, isoliert und in eine Lösung von 15,0 g 2-Hydroxyethylpiperazin in 200 ml Wasser eingetragen. Man erhitzt die Mischung 2 Stunden auf 60° und anschließend 4 Stunden auf 95°. Nach Abkühlung wird der erhaltene Farbstoff mit Natriumchlorid ausgesalzen, abgesaugt, mit verdünnter Natriumchloridlösung gewaschen und getrocknet.

Erhalten wird ein Produkt der Formel (I), in dem
$R_1$, $R_2$ = Cl, $R_3$ = H, m = 0, n = 1 und

$R_5$, $R_6$ = 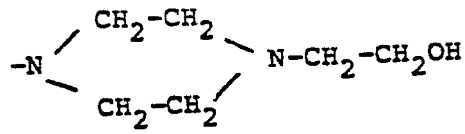

$\lambda_{max}$ = 578 nm und 629 nm in 5 %iger Essigsäure.

Für die Anwendung zum Färben von Papier aus verdünnter essigsaurer oder ameisensaurer Lösung gilt das in Beispiel 44 Gesagte. C.I. Indicator Number 14.

Weitere Farbstoffe, die Papier aus den Lösungen in verdünnten schwachen Säuren rotstichig blau färben, werden erhalten, wenn man die in der Tabelle II, Spalte 2, angegebenen Triphendioxazine im Molverhältnis 1 : 2 mit Cyanurchlorid kondensiert und die erhaltenen Zwischenprodukte mit 4 Mol Aminkomponente der Spalte 3 kondensiert, so daß Farbstoffe der Formel (I) resultieren, in der m = 0, n = 1 und $R_5$ = $R_6$ ist. C.I. Indicator Number 14.

(Siehe Tabelle II Seite 18 ff.)

Tabelle II

| Beispiel Nr. | Triphendioxazin-Komponente | Amin-Komponente |
|---|---|---|
| 47 | 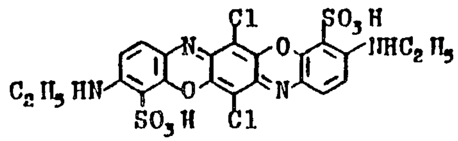 | $NH_2-(CH_2)_3-N(CH_3)_2$ |
| 48 | " | 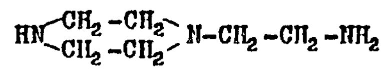 |
| 49 | 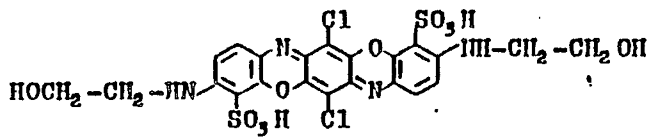 | $NH_2-(CH_2)_3-N(C_2H_5)_2$ |
| 50 | " | $NH_2-(CH_2)_3-N(CH_2-CH_2OH)_2$ |
| 51 | " | $NH_2-(CH_2)_3-N(CH_3)_2$ |
| 52 | 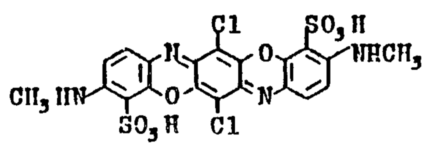 | 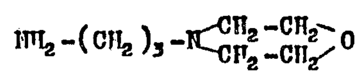 |

Tabelle II (Fortsetzung)

| Beispiel Nr. | Triphendioxazin-Komponente | Amin-Komponente |
|---|---|---|
| 53 | 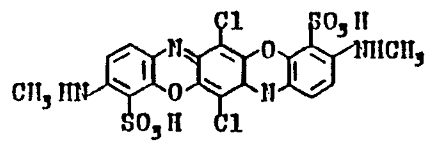 | 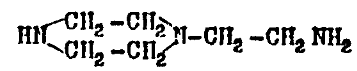 |
| 54 | " | 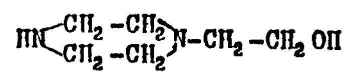 |
| 55 | 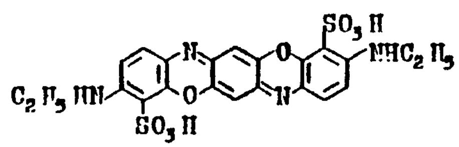 | $NH_2-(CH_2)_3-N(CH_2-CH_2OH)_2$ |
| 56 | 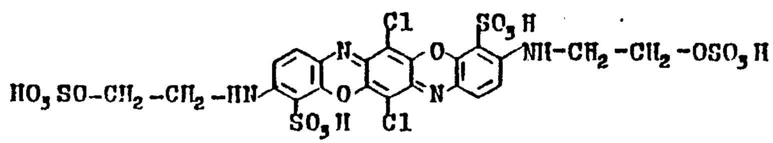 | 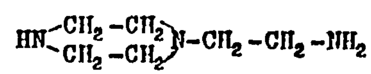 |
| 57 | 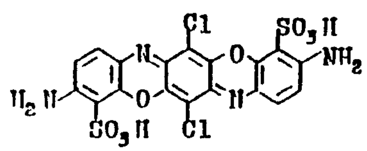 | 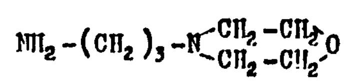 |

Tabelle II (Fortsetzung)

| Beispiel Nr. | Triphendioxazin-Komponente | Amin-Komponente |
|---|---|---|
| 58 | 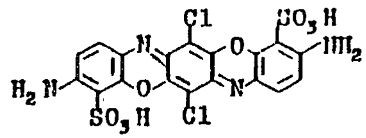 | $NH_2(CH_2)_3-N(C_2H_5)_2$ |
| 59 | " | $NH_2-(CH_2)_2-N(CH_3)_2$ |
| 60 | " | $NH_2-(CH_2)_3-N(CH_2-CH_2OH)_2$ |
| 61 | " | $NH_2-(CH_2)_3-N(CH_3)-CH_2-CH_2OH$ |
| 62 | " | 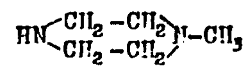 |
| 63 | " | 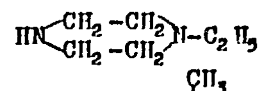 |
| 64 | " | $NH_2-(CH_2)_3-N(CH_3)-(CH_2)_3-NH_2$ |
| 65 | " | $NH_2-(CH_2-CH_2-NH)_2-CH_2-CH_2-NH_2$ |
| 66 | " | $NH_2-(CH_2)_2-NH-(CH_2)_2-NH_2$ |
| 67 | " | $NH_2-CH_2-CH_2-N(C_2H_5)_2$ |
| 68 | 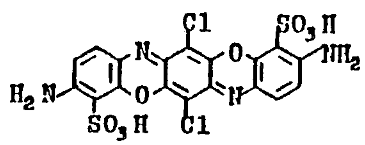 | $NH_2-(CH_2)_3-NHCH_3$ |

Tabelle II (Fortsetzung)

| Beispiel Nr. | Triphendioxazin-Komponente | Amin-Komponente |
|---|---|---|
| 69 | " | 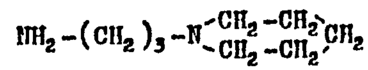 |
| 70 | 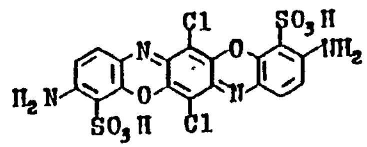 | $NH_2-CH_2-CH_2-NH-CH_2-CH_2OH$ |
| 71 | " | $NH_2-(CH_2)_6-NH_2$ |
| 72 | " | 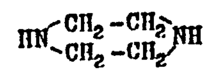 |
| 73 | " | 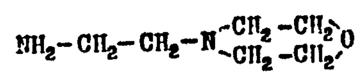 |
| 74 | 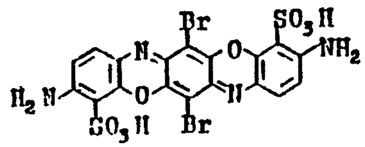 | $NH_2-(CH_2)_3-N(CH_3)_2$ |
| 75 | 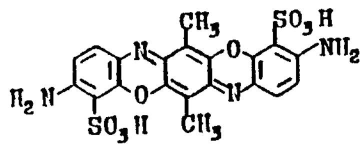 | 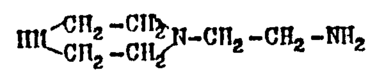 |
| 76 | 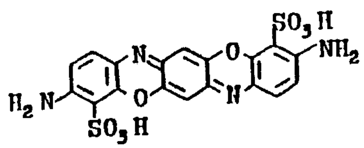 | $NH_2-(CH_2)_3-N(C_2H_5)_2$ |

Beispiel 77

12,0 g eines Triphendioxazins der Formel

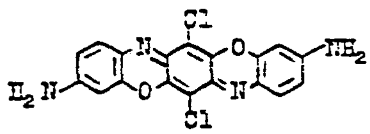

werden in 120 ml Dimethylformamid suspendiert. Zu der Suspension werden 10,8 g Cyanurfluorid bei 25° in 15 Minuten zugetropft, worauf die Farbe der Suspension allmählich von blau über violett nach rotbraun wechselt. Man rührt noch 3 Stunden nach, bis die eingesetzte Farbbase verschwunden ist. Eine Probe der entstandenen Substanz löst sich in warmem Nitrobenzol nun rein rotviolett. Der entstandene Niederschlag wird abgesaugt und mit Methanol gewaschen. Nach Trocknen im Luftstrom wird das erhaltene Kondensationsprodukt in 70 ml 2-Aminoethylpiperazin eingetragen. Man rührt die Lösung zunächst 3 Stunden bei 35° und steigert die Temperatur dann weitere 5 Stunden auf 70°. Nach beendeter Kondensation wird die Lösung mit 15 % iger Natriumchloridlösung verdünnt, der ausgefällte Farbstoff mit Natriumchloridlösung gewaschen und getrocknet.

Das anfallende Produkt entspricht der Formel (I) ; darin ist

$R_1$, $R_2$ = Cl, $R_3$ = H und m, n = 0 und

$R^5$, $R^6$ = 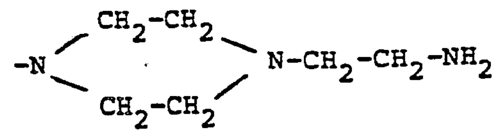

$\lambda_{max}$ = 554 nm in 5 %iger Essigsäure.

Zwecks Verwendung zum Papierfärben werden 10 g des erhaltenen Farbstoffes in 30 ml Essigsäure und 60 ml Wasser gelöst. Die gebrauchsfertige Lösung kann zum Färben je nach Bedarf verdünnt werden. Es werden auf Papier blauviolette Färbungen mit hohen Ausziehgraden und hervorragenden Naßechtheiten erzielt. C.I. Indicator Number 12.

Beispiel 78

10,6 g Farbbase der Formel

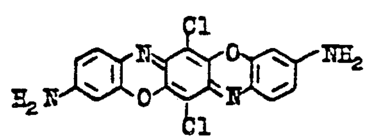

werden in 100 ml N-Methylpyrrolidon gelöst bzw. suspendiert. Man gibt 7,6 ml N,N-Dimethylanilin zu und läßt dann bei 25°, 5,3 ml Cyanurfluorid zutropfen. Nach 1 Stunde steigert man die Temperatur auf 45° und rührt eine weitere Stunde bei dieser Temperatur. Man kühlt ab, läßt 300 ml Methanol zutropfen, saugt ab und wäscht den Filterkuchen mit Methanol. 16,0 g des erhaltenen Kondensationsproduktes werden in 60 ml 3-Dimethylamino-1-aminopropan in 1 Stunde eingetragen. Man läßt dabei die Temperatur nicht über 35° steigen, rührt, die Lösung 3 Stunden bei 35° bis 40° und steigert dann die Temperatur für weitere 5 Stunden auf 60°. Nach Abkühlung wird die erhaltene Lösung in 800 ml 20 %ige Natriumchloridlösung eingetropft, das ausgefällte Produkt abgesaugt, mit Natriumchloridlösung gewaschen und gegebenenfalls getrocknet.

Erhalten wird ein Farbstoff der Formel (I), in der

$R_1$, $R_2$ = Cl, $R_3$ = H, m, n = 0 und
$R_5$, $R_6$ = $-NH-CH_2-CH_2-CH_2-N(CH_3)_2$ ist.
$\lambda_{max}$ = 547 nm in 5 %iger Essigsäure.

Für das Färben von Papier wird der Farbstoff gemäß den Angaben des Beispiels 77 in die protonierte Form gebracht und damit eine gebrauchsfertige Lösung hergestellt. Es werden auf geleimten und ungeleimten Papier ebenfalls sehr naßechte blauviolette Färbungen erhalten. Nur schwache Färbung der Abwässer zeigt hohe Ausziehgrade an. C.I. Indicator Number 12.

Beispiel 79

12,0 g 3,10-Diamino-6,13-dichlortriphendioxazin werden entsprechend den Angaben des Beispiels 77

mit 10,8 ml Cyanurfluorid in 120 ml Dimethylformamid umgesetzt und das abgeschiedene Kondensationsprodukt isoliert. Das erhaltene Zwischenprodukt wird in 75 ml N-Hydroxyethylpiperazin eingetragen, man erwärmt zunächst 30 Minuten auf 50 bis 55°, worauf das Reaktionsgemisch sehr dick wird. Sodann steigert man die Temperatur auf 80° und rührt noch 2 Stunden bei dieser Temperatur. Man kühlt auf 50° ab und läßt nun 250 ml Aceton zutropfen. Der ausgefallene Niederschlag wird bei 20° abgesaugt und mit Aceton gewaschen.

Der erhaltene Farbstoff der Formel (I), in der
$R_1$, $R_2$ = Cl, $R_3$ = H, m, n = 0

$R_5$, $R_6$ = 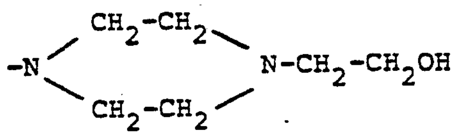

$\lambda_{max}$ = 555 nm in 5 %iger Essigsäure

läßt sich entsprechend den Angaben am Schluß des Beispiels 77 ebenfalls zur violetten Färbung von Papier einsetzen. Seine anwendungstechnischen Eigenschaften sind ähnlich denen des dort beschriebenen Farbstoffes. C.I. Indicator Number 12.

Beispiel 80

10,0 g Triphendioxazin der Formel

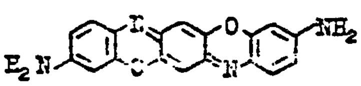

werden in 100 ml Dimethylformamid suspendiert. Zu der Suspension läßt man 9,0 ml Cyanurfluorid in 10 Minuten zutropfen. Man rührt eine Stunde bei Raumtemperatur und erwärmt anschließend 2 1/2 Stunden auf 35 bis 40°. Nach Abkühlen auf 20° wird der bräunliche Niederschlag abgesaugt, mit Methanol gewaschen und trocken gesaugt 17,0 g des erhaltenen Produkts werden in 100 ml 1-Amino-3-dimethylaminopropan eingetragen innerhalb einer halben Stunde, wobei eine leichte Wärmetönung auftritt. Anschließend erwärmt man die Mischung in etwa 30 Minuten auf 75° und hält diese Temperatur 2 Stunden. Die entstandene Lösung wird abgekühlt und in 2 Liter 25 %ige Natriumchloridlösung eingegossen. Die erhaltene Suspension wird abgesaugt und mit Natriumchloridlösung gewaschen. Man erhält ein Produkt der Formel (I), in der

$R_1$, $R_2$ = H, $R_3$ = H, m, n = 0
$R_5$, $R_6$ = $-NH-(CH_2)_3-N(CH_3)_2$
$\lambda_{max}$ = 549 nm in 5 %iger Essigsäure.

Das erhaltene Produkt wird zur Anwendung auf Papier entsprechend den Angaben des Beispiels 77 in verdünnter Essigsäure gelöst. Der Farbstoff färbt Papier in etwas röter violetten Tönen als der des Beispiels 78. C.I. Indicator Number 12.

Beispiel 81

10,0 g Triphendioxazin der Formel

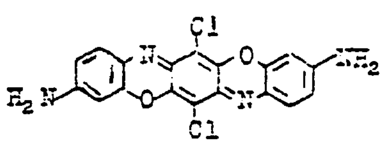

80 ml Nitrobenzol und 12,0 g Cyanurchlorid werden 4 Stunden lang auf 120° erhitzt. Nach Abkühlen wird der Niederschlag bei 20° abgesaugt und mit Methanol gewaschen.

16,0 g des erhaltenen Zwischenproduktes werden in 60 ml 1-Amino-3-dimethylaminopropan eingetragen. Man erwärmt 2 Stunden auf 75° und arbeitet dann, wie im Beispiel 78 beschrieben durch Eintragen des Reaktionsgemisches in Natriumchloridlösung auf. Das erhaltene Produkt der Formel (I) mit

$R_1$, $R_2$ = Cl, $R_3$ = H, m, n = 0 und
$R_5$, $R_6$ = $-NH-(CH_2)_3-N(CH_3)_2$

ist identisch mit dem des Beispiels 78.

Beispiel 82

13,5 g des in Beispiel 3 erhaltenen Farbstoffes der Formel (VII) mit

q = 2 und $R'_5$ = 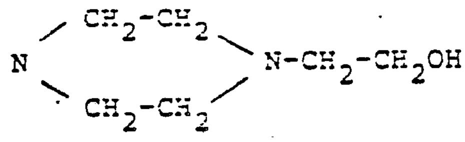

werden bei 20° in 150 ml Wasser gelöst bzw. suspendiert. Man tropft 5,0 ml Dimethylsulfat zu und hält im Reaktionsgemisch den pH-Wert mit 1 n Natronlauge auf 8,5 bis 9,0.

Nach 4 Stunden erwärmt man die erhaltene Suspension unter den gleichen pH-Bedingungen 1 Stunde auf 80 bis 85°, kühlt anschließend auf 20° ab und isoliert das erhaltene produkt durch Absaugen.

Erhalten wird ein Farbstoff der Formel (VII) mit

q = 2 und $R_5$ = 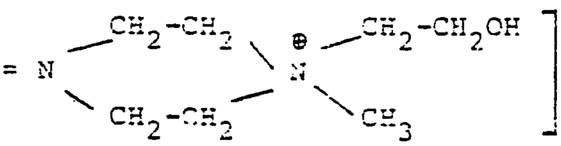 $CH_3SO_4^{\ominus}$

$\lambda_{max}$ = 637 nm in 5 %iger Essigsäure,

der sich ebenfalls zur naßechten Färbung von Papier aus saurer Lösung verwenden läßt. C.I. Indicator Number 14.

Alternativ kann man die erhaltene Suspension nach Abkühlen auf 20° auch durch Zusatz Essigsäure oder Methansulfonsäure in Lösung bringen und die erhaltene Lösung direkt zur Färbung von Papier einsetzen.

Beispiel 83

9,0 g des in Beispiel 78 erhaltenen Farbstoffes werden in 90 ml Wasser suspendiert, man setzt zu der Suspension 0,1 ml eines Emulgators (auf der Basis von Laurylalkohol und Ethylenoxid) und stellt den pH-Wert mit 1 n Natronlauge auf 10, worauf der Ansatz dick wird. Nun tropft man bei 25° 6,0 g Dimethylsulfat zu und hält den pH-Wert weiter zwischen 9,0 bis 10,0. Der Ansatz wird dünner, und es tritt schließlich Lösung ein. Man rührt nun 2 Stunden unter den angegebenen Bedingungen nach und erwärmt noch 1 Stunde auf 80 bis 85°.

Wenn kein Natronlaugeverbrauch mehr nachweisbar ist, wird die Lösung abgekühlt. Sie enthält einen Farbstoff der Formel (I), in der

$R_1$, $R_2$ = Cl, $R_3$ = H, m, n = 0,

$R_5$, $R_6$ = 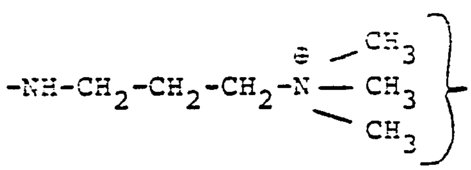 $CH_3SO_4^{\ominus}$

ist.

$\lambda_{max}$ = 546 nm in 5 %iger Essigsäure.

Zur praktischen Verwendung stellt man die Lösung schwach sauer und kann sie, falls erwünscht, durch Einengen im Vakuum aufkonzentrieren. Mit der erhaltenen Lösung läßt sich Papier ebenfalls blauviolett anfärben, wobei der Farbstoff praktisch vollständig auf das Papier aufzieht. C.I. Indicator Number 12.

Analog zu Beispiel 83 kann man weiterhin die in Tabelle IV, Spalte 2, aufgeführten Triphendioxazin-Komponenten mit 2 Mol Cyanurfluorid kondensieren und die erhaltenen Zwischenprodukte mit 4 Mol Amin der Spalte 3 umsetzen. Man erhält dann wiederum basische, in schwachen Säuren lösliche Farbstoffe, die geeignet sind zum Färben von Papier in den in der Spalte 4 angegebenen Farbtönen.

(Siehe Tabelle IV Seite 25 ff.)

Tabelle IV

| Beispiel Nr. | Triphendioxazin-Komponente | Amin-Komponente | C.I. Indicator-Number |
|---|---|---|---|
| 84 | 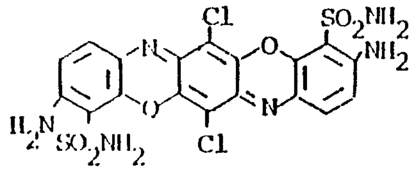 | $NH_2-(CH_2)_3-N(CH_3)_2$ | 13 |
| 85 | " | 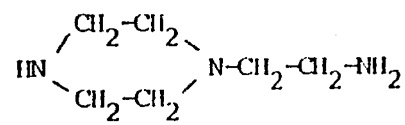 | 13 |
| 86 | 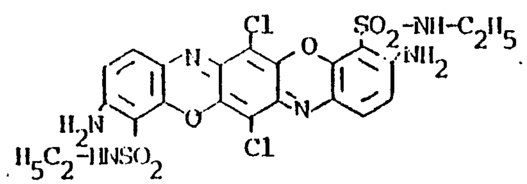 | 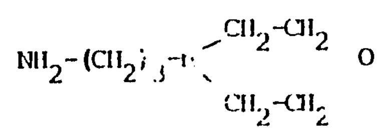 | 13 |
| 87 | 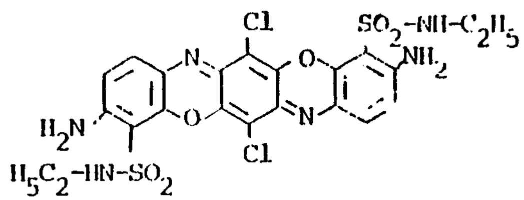 | $NH_2-(CH_2)_3-N(CH_3)_2$ | 13 |
| 88 | 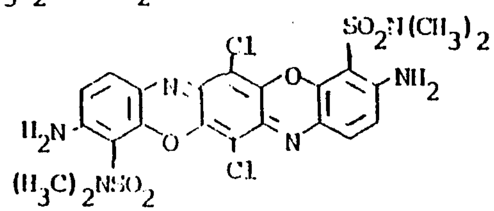 | 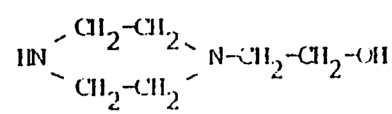 | 13 |

Tabelle IV (Fortsetzung)

| Beispiel Nr. | Triphendioxazin-Komponente | Amin-Komponente | C.I. Indicator-Number |
|---|---|---|---|
| 89 | 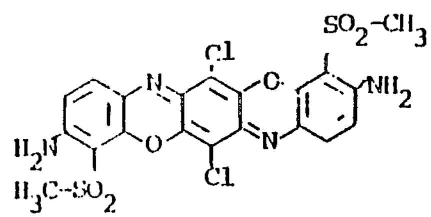 | $NH_2-(CH_2)_3-N(CH_3)_2$ | 12 |
| 90 | 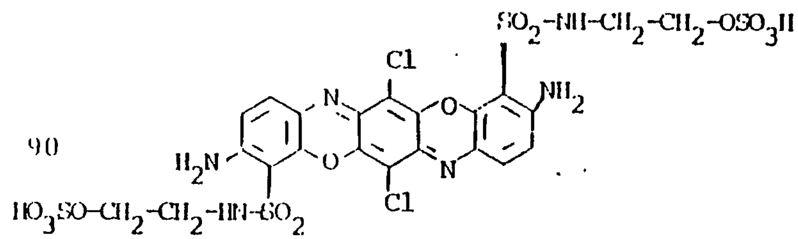 | $NH_2-(CH_2)_3-N(C_2H_5)_2$ | 13 |

Beispiel 91

12,0 g Farbstoff des Beispiels 7 werden in 100 ml Wasser gelöst bzw. suspendiert. Man läßt 5,0 ml Dimethylsulfat zutropfen und hält den pH-Wert mit 2n Natronlauge auf 8,5-9,0. Nach 4 Stunden erwärmt man auf 50 °C, hält 3 Stunden bei dieser Temperatur und erhitzt anschließend noch eine Stunde auf 75-80 °C. Wenn keine Natronlauge mehr aufgenommen wird, kühlt man die erhaltene Lösung auf Raumtemperatur ab und stellt mit 7 ml Eisessig einen pH-Wert von 3,5 ein.

Man erhält eine für das Färben von Papier gebrauchsfertige blaue Lösung des Farbstoffes der Formel (VII) mit

q = 2 und $R'_5$ = 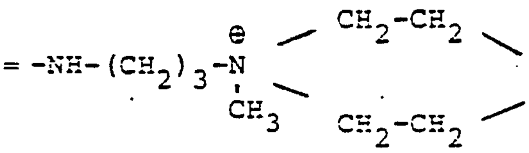 $CH_3SO_4^{\ominus}$

$\lambda_{max}$ = 638 nm in 5 %iger Essigsäure.

**Patentansprüche**

1. Triphendioxazinfarbstoffe der Formel

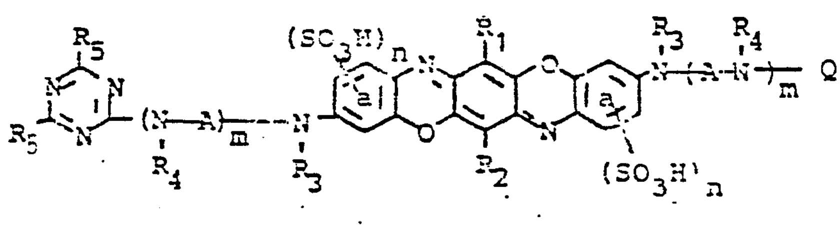

worin

Q den Rest 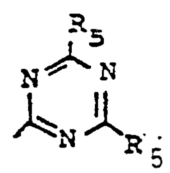

oder Wasserstoff,

$R_1$ und $R_2$ unabhängig voneinander Wasserstoff, Halogen, Alkyl, Aryl, Alkoxy, Aryloxy, CN, $CONH_2$, CONH-Alkyl, $CON(Alkyl)_2$, CONH-Aryl, COO-Alkyl, NH-CO-Alkyl, NH-CO-Aryl oder NH-Aryl und

$R_3$ und $R_4$ unabhängig voneinander Wasserstoff oder Alkyl bedeuten oder

$R_3$ und $R_4$ ringgeschlossen sind,

A einen zweiwertigen, gegebenenfalls durch Sauerstoff oder Schwefel unterbrochenen Kohlenwasserstoffrest und

$R_5$ einen Rest eines Polyamins, das protoniert oder quaterniert sein kann,

bedeuten,

m 0 oder 1 und

n 0-2 bedeuten,

und worin die genannten cyclischen und acyclischen Substituenten ihrerseits durch in der Farbstoffchemie übliche nichtionische, kationische oder anionische Reste substituiert sein können, und die Ringe a durch in der Farbstoffchemie übliche nichtionische Reste substituiert sein können, mit der Maßgabe, daß die Summe der anionischen Gruppen kleiner als die Summe der protonierbaren oder quaternierbaren Stickstoffatome in $R_5$ ist.

2. Triphendioxazinfarbstoffe gemäß Anspruch 1, wobei $R_5$ für

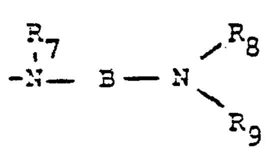

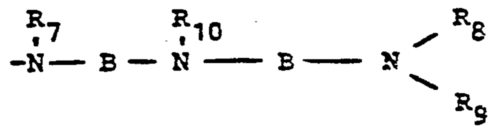

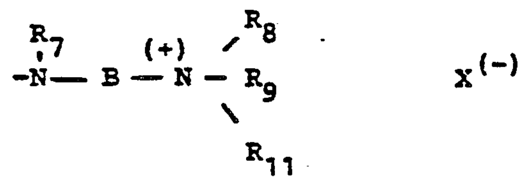

oder

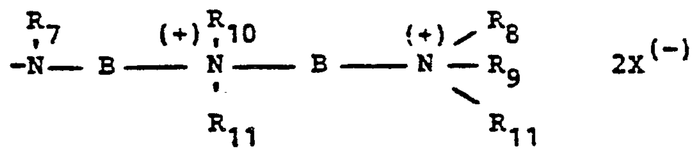

steht, worin

$R_7$-$R_{10}$ Wasserstoff oder Alkyl und

$R_{11}$ Wasserstoff, Alkyl oder Aralkyl bedeuten, oder

$R_7$ mit $R_8$ oder $R_7$ mit $R_{10}$ oder $R_8$ mit $R_{10}$ oder $R_8$ mit $R_9$ oder $R_8$ mit $R_9$ und $R_{11}$ zu einem Ring geschlossen sind,

B für gegebenenfalls verzweigtes $C_2$-$C_6$-Alkylen, Cyclohexylen, Phenylen oder einen Rest der Formeln

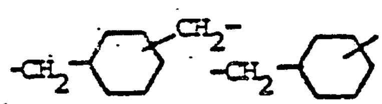 , 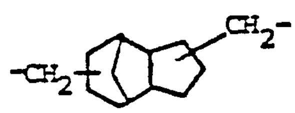 oder

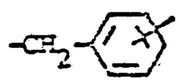 und

$X^{(-)}$ für ein Anion stehen,

und worin die genannten, cyclischen und acyclischen Reste ihrerseits durch in der Farbstoffchemie übliche nichtionische oder kationische Reste substituiert sein können, und

A für gegebenenfalls verzweigtes Alkylen mit 2-6 C-Atomen, das durch O oder S unterbrochen oder durch OH substituiert sein kann, oder für die Reste

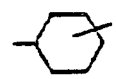

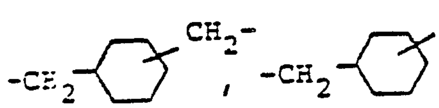 , 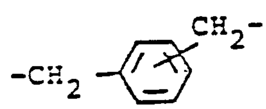

oder 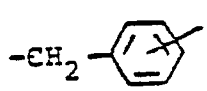

die durch $C_1$-$C_4$-Alkyl substituiert sein können, steht.

3. Triphendioxazinfarbstoffe gemäß Anspruch 1 der Formel

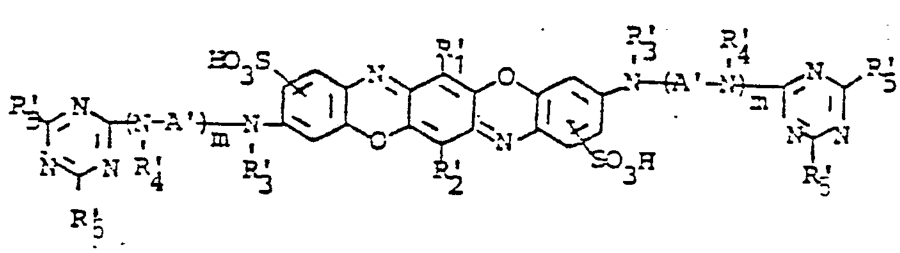

worin

$R_1'$ und $R_2'$ Wasserstoff, Halogen,

$R_3'$ und $R_4'$ Wasserstoff oder $C_1$-$C_4$-Alkyl, das durch OH oder Sulfato substituiert sein kann, und

A' gegebenenfalls verzweigtes $C_2$-$C_6$-Alkylen, das durch O oder S unterbrochen oder durch OH substituiert sein kann, oder die Reste

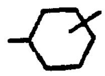 , 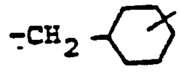 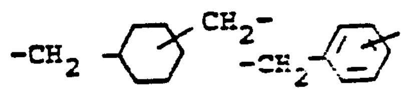

die durch $C_1$-$C_4$-Alkyl substituiert sein können, bedeuten oder

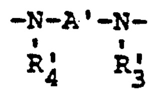

für gegebenenfalls durch $C_1$-$C_4$-Alkyl substituiertes Piperazin steht,

$R_5'$ einen Rest der Formeln

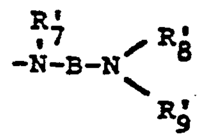 , 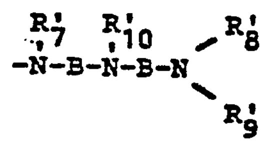

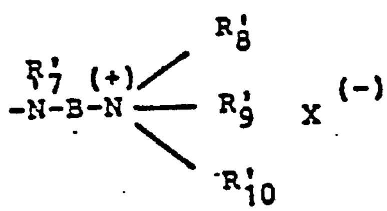 oder 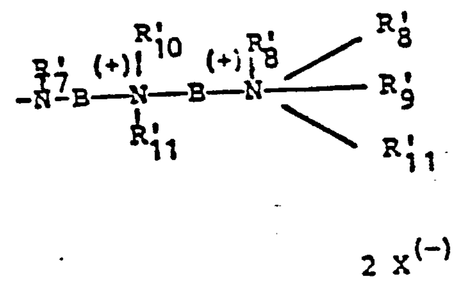

$R_7'$-$R_{11}'$ Wasserstoff, gegebenenfalls durch Hydroxy, $C_1$-$C_4$-Alkoxy, Halogen, Cyan, $C_1$-$C_4$-Alkoxycarbonyl oder $C_1$-$C_4$-Alkylcarbonyl substituiertes $C_1$-$C_4$-Alkyl und

$R_{11}'$ außerdem gegebenenfalls durch $C_1$-$C_4$-Alkyl, Hydroxy, $C_1$-$C_4$-Alkoxy oder Halogen substituiertes Benzyl oder Phenylethyl, und

B $C_2$-$C_6$-Alkylen, Cyclohexylen, Phenylen oder einen gegebenenfalls durch $C_1$-$C_4$-Alkyl substituierten Rest der Formeln

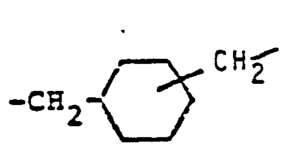 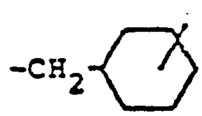 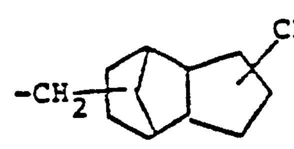 oder

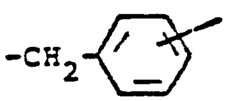 bedeuten oder

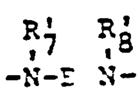 oder 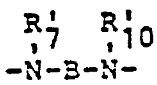 oder 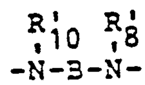

einen gegebenenfalls durch $C_1$-$C_4$-Alkyl substituierten Piperazin- oder Imidazolidin-Ring darstellen, oder

$R_8'$—N—$R_9'$ einen gegebenenfalls durch $C_1$-$C_4$-Alkyl substituierten Piperidin-, Morpholin-, Piperazin- oder Pyrrolidin-Ring oder

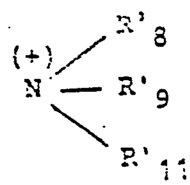

einen gegebenenfalls durch $C_1$-$C_4$-Alkyl substituierten Pyridinium-Rest und
$X^{(-)}$ ein Anion darstellen, und
m 0 oder 1 bedeutet.

4. Triphendioxazinfarbstoffe gemäß Anspruch 3, wobei $R_1'$ und $R_2'$ für Chlor und $R_3'$ und $R_4'$ für Wasserstoff oder $C_1$-$C_4$-Alkyl stehen.

5. Triphendioxazinfarbstoffe gemäß Anspruch 1 der Formeln

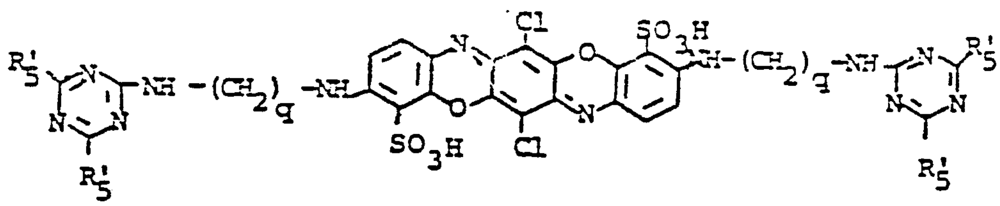

und

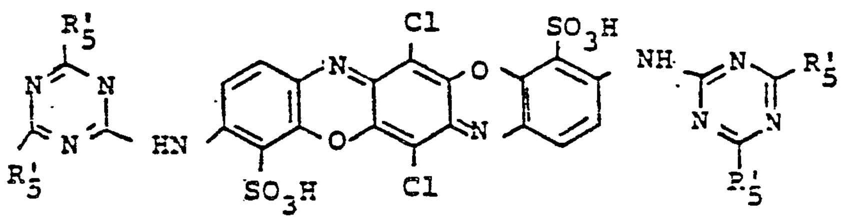

worin
$R_5'$ die in Anspruch 3 angegebene Bedeutung hat, und
q für 2, 3 oder 4 steht.

6. Triphendioxazinfarbstoffe gemäß Anspruch 5, wobei
$R_5'$ für $—NH—(CH_2)_3—N(R_{12}')_2$

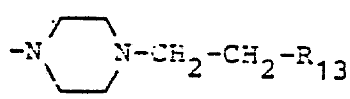 oder

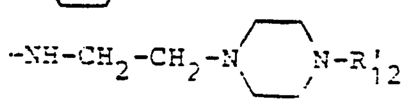

und für die durch Quaternierung mit $R_{11}''—X$ erhaltenen Ammoniumverbindungen dieser Amine,
$R_{11}''$ und $R_{12}'$ für Wasserstoff, Methyl oder Ethyl,
$R_{13}$ für OH oder $N(R_{12}')_2$ und
X für einen als Anion $X^{(-)}$ abspaltbaren Rest stehen.

7. Verfahren zur Herstellung von Triphendioxazinfarbstoffen des Anspruchs 1, dadurch gekennzeichnet, daß man Trihalogentriazine der Formel

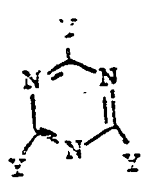

worin Y = F, Cl, Br mit Farbbasen der Formel

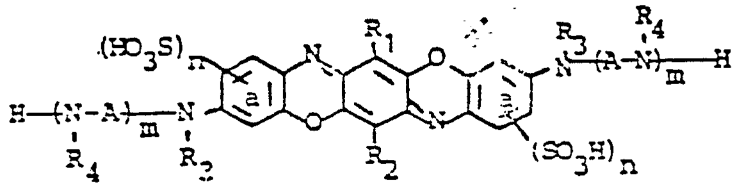

worin $R_1$, $R_2$, $R_3$, $R_4$, A, m und n die in Anspruch 1 angegebene Bedeutung haben, und mit Verbindungen der Formel $R_5H$, worin $R_5$ die in Anspruch 1 angegebene Bedeutung hat, umsetzt.

8. Verwendung der Triphendioxazinfarbstoffe des Anspruchs 1 zum Färben von mit basischen Farbstoffen färbbaren Substraten, insbesondere Papier.

9. Mit den Triphendioxazinfarbstoffen des Anspruchs 1 gefärbtes oder bedrucktes Material.

**Claims**

1. Triphendioxazine dyestuffs of the formula

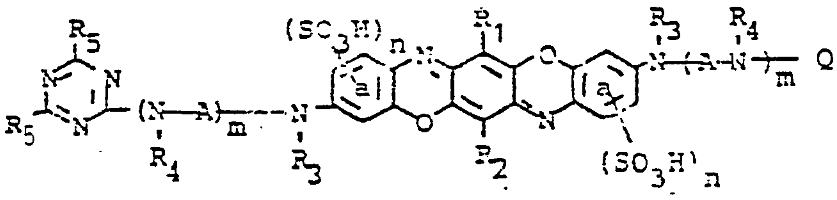

wherein

Q denotes the radical 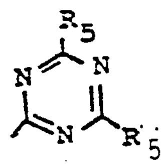

or hydrogen,

$R_1$ and $R_2$, independently of each other, denote hydrogen, halogen, alkyl, aryl, alkoxy, aryloxy, CN, $CONH_2$, CONH-alkyl, $CON(alkyl)_2$, CONH-aryl, COO-alkyl, NH—CO-alkyl, NH—CO-aryl or NH-aryl and

$R_3$ and $R_4$, independently of each other, denote hydrogen or alkyl, or

$R_3$ and $R_4$ are joined together into a ring,

A denotes a divalent hydrocarbon radical which is optionally interrupted by oxygen or sulphur and

$R_5$ denotes a radical of a polyamine which can be protonated or quaternised,

m denotes 0 or 1 and

n denotes 0-2,

and wherein said cyclic and acyclic substituents can in turn be substituted by nonionic, cationic or anionic radicals customary in dyestuff chemistry, and the rings a can be substituted by nonionic radicals customary in dyestuff chemistry, with the proviso that the total number of anionic groups is less than the total number of protonatable or quaternisable nitrogen atoms in $R_5$.

2. Triphendioxazine dyestuffs according to Claim 1, where $R_5$ represents

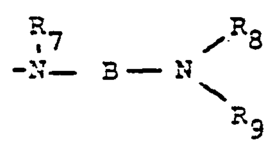

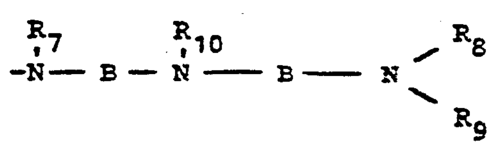

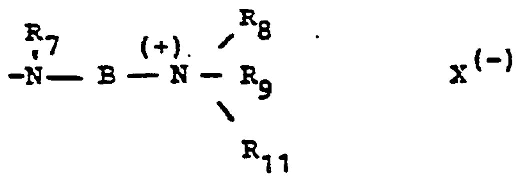

or

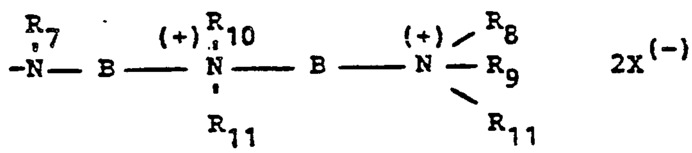

wherein

$R_7$-$R_{10}$ denote hydrogen or alkyl and

$R_{11}$ denotes hydrogen, alkyl or aralkyl, or

$R_7$ and $R_8$ or $R_7$ and $R_{10}$ or $R_8$ and $R_{10}$ or $R_8$ and $R_9$ or $R_8$, $R_9$ and $R_{11}$ are joined together to form a ring,

B represents optionally branched $C_2$-$C_6$-alkylene, cyclohexylene, phenylene or a radical of the formulae

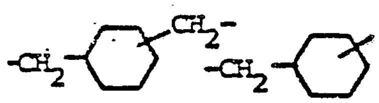 , 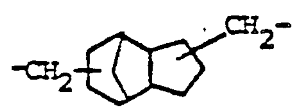 or

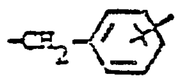 and

$X^{(-)}$ represents an anion,

and wherein the said cyclic and acyclic radicals can in turn be substituted by nonionic or cationic radicals customary in dyestuff chemistry, and

A represents optionally branched alkylene having 2-6 C atoms which can be interrupted by O or S or be substituted by OH, or the radicals

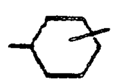

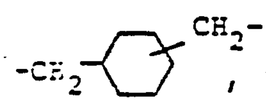 , 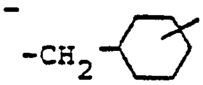 , 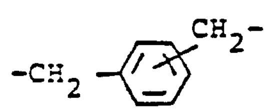

or 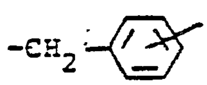

which can be substituted by $C_1$-$C_4$-alkyl.

3. Triphendioxazine dyestuffs according to Claim 1 of the formula

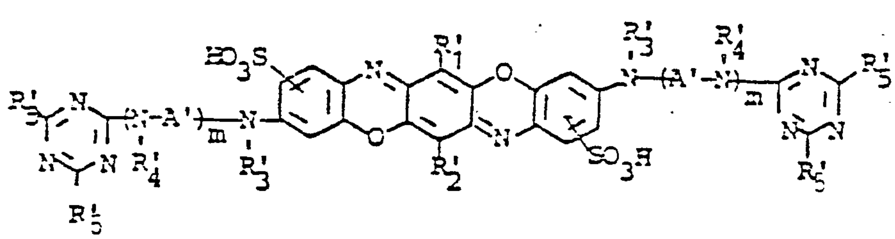

wherein

$R_1'$ and $R_2'$ denote hydrogen or halogen,

$R_3'$ and $R_4'$ denote hydrogen or $C_1$-$C_4$-alkyl which can be substituted by OH or sulphato, and

A′ denotes optionally branched $C_2$-$C_6$-alkylene which can be interrupted by O or S or be substituted by OH, or the radicals

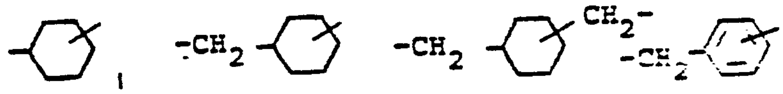

which can be substituted by $C_1$-$C_4$-alkyl, or

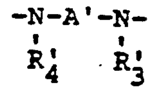

represents optionally $C_1$-$C_4$-alkyl-substituted piperazine,

$R_5'$ denotes a radical of the formulae

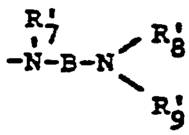 , 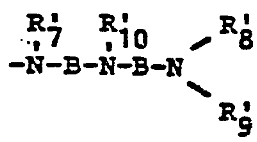

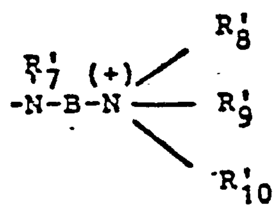 $X^{(-)}$ or 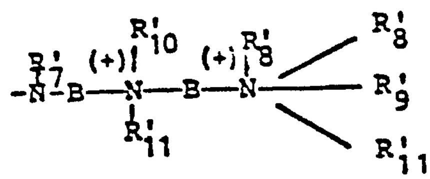

$2\ X^{(-)}$

$R_7'$-$R_{11}'$ denote hydrogen, optionally hydroxyl-$C_1$-$C_4$-alkoxy-, halogen-, cyano-, $C_1$-$C_4$-alkoxycarbonyl- or $C_1$-$C_4$-alkylcarbonyl substituted $C_1$-$C_4$-alkyl and

$R_{11}'$ also denotes optionally $C_1$-$C_4$-alkyl-, hydroxyl-, $C_1$-$C_4$-alkoxy- or halogen-substituted benzyl or phenylethyl and

B denotes $C_2$-$C_6$-alkylene, cyclohexylene, phenylene or an optionally $C_1$-$C_4$-alkyl-substituted radical of the formulae

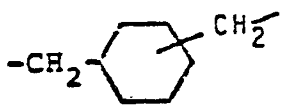 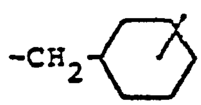 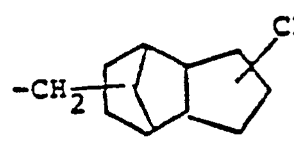 or

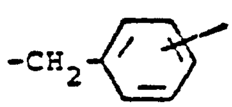 or

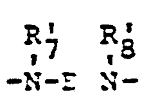 or 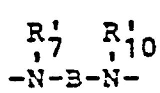 or 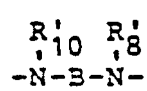 represent

an optionally $C_1$-$C_4$-alkyl-substituted piperazine or imidazolidine ring, or

$R_8'$—N—$R_9'$ represents an optionally $C_1$-$C_4$-alkyl-substituted piperidine, morpholine, piperazine or pyrrolidine ring or

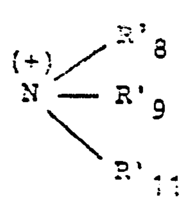

represents an optionally $C_1$-$C_4$-alkyl-substituted pyridinium radical and

$X^{(-)}$ represents an anion and

m denotes 0 or 1.

4. Triphendioxazine dyestuffs according to Claim 3, where $R_1'$ and $R_2'$ represent chlorine and $R_3'$ and $R_4'$ represent hydrogen or $C_1$-$C_4$-alkyl.

5. Triphendioxazine dyestuffs according to Claim 1 of the formulae

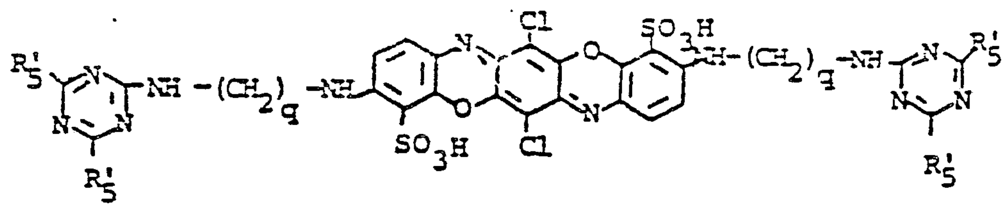

and

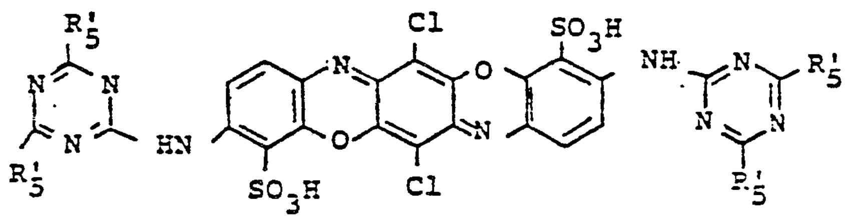

wherein

$R_5'$ has the meaning given in Claim 3 and

q represents 2, 3 or 4.

6. Triphendioxazine dyestuffs according to Claim 5 where

$R_5'$ represents $—NH—(CH_2)_3—N(R_{12}')_2$

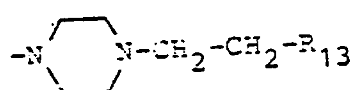

or

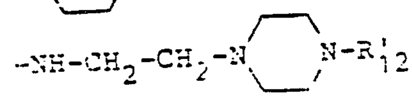

and the ammonium compounds of these amines obtained by quaternisation with $R_{11}''—X$,

$R_{11}'$ and $R_{12}'$ represent hydrogen, methyl or ethyl,

$R_{13}$ represents OH or $N(R_{12}')_2$ and

X represents a radical detachable in the form of the anion $X^{(-)}$.

7. Process for preparing triphendioxazine dyestuffs of Claim 1, characterised in that trihalogenotriazines of the formula

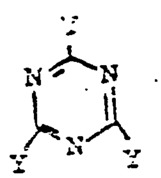

wherein Y = F, Cl or Br, are reacted with dyestuff bases of the formula

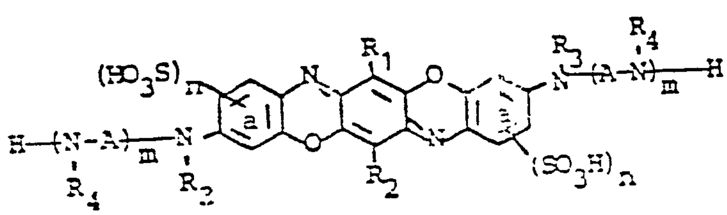

wherein $R_1$, $R_2$, $R_3$, $R_4$, A, m and n have the meaning given in Claim 1, and with compounds of the formula $R_5H$ wherein $R_5$ has the meaning given in Claim 1.

8. Use of the triphendioxazine dyestuffs of Claim 1 for dyeing substrates which can be dyed with basic dyestuffs, in particular paper.

9. Material dyed or printed with the triphendioxazine dyestuffs of Claim 1.

**Revendications**

1. Colorants de triphénodioxazines de formule

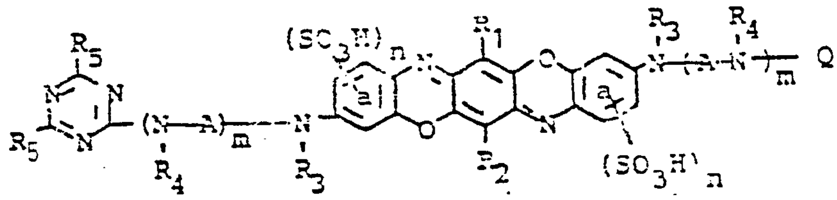

dans laquelle

Q représente le reste 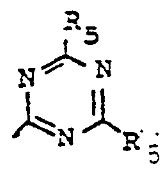

ou un atome d'hydrogène,

$R_1$ et $R_2$ représentent indépendamment l'un de l'autre l'hydrogène, un halogène, alkyle, aryle, alcoxy, aryloxy, CN, $CONH_2$, CONH-alkyle, $CON(alkyle)_2$, CONH-aryle, COO-alkyle, NH—CO-alkyle, NH—CO-aryle ou NH-aryle et

$R_3$ et $R_4$ représentent indépendamment l'un de l'autre l'hydrogène ou un alkyle, ou bien

$R_3$ et $R_4$ forment un cycle,

A représente un reste divalent d'hydrocarbure, éventuellement interrompu par l'oxygène ou le soufre et

$R^5$ représente un reste d'une polyamine qui peut être protonée ou quaternisée,

m représente 0 ou 1 et

n représente 0 à 2,

et dans laquelle les substituants cycliques et acycliques cités peuvent à leur tour être substitués par des restes non ioniques, cationiques ou anioniques habituels dans la chimie des colorants, et les noyaux a peuvent être substitués par des restes non ioniques habituels dans la chimie des colorants, avec la condition que la somme des groupes anioniques soit inférieure à la somme des atomes d'azote susceptibles de protonation ou de quaternisation dans $R_5$.

2. Colorants de triphénodioxazines selon la revendication 1, dans lesquels $R_5$ représente

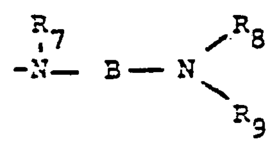

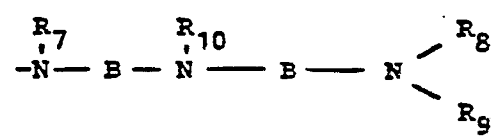

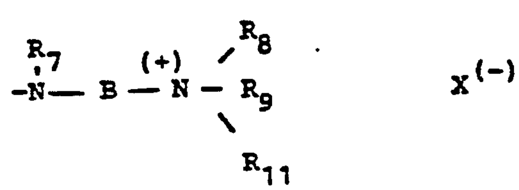

ou

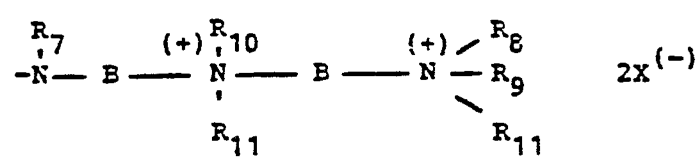

dans lesquelles

$R_7$-$R_{10}$ représentent l'hydrogène ou un alkyle et

$R_{11}$ représente l'hydrogène ou un alkyle ou aralkyle, ou bien

$R^7$ pris avec $R_8$ ou $R_7$ pris avec $R_{10}$ ou $R_8$ pris avec $R_{10}$ ou $R_8$ pris avec $R_9$ ou $R_8$ pris avec $R_9$ et $R_{11}$ forment un cycle

B représente un reste alkylène en $C_2$-$C_6$ éventuellement ramifié, cyclohexylène ou phénylène ou un reste de formules

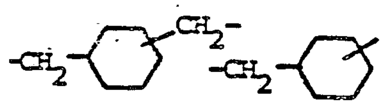 , 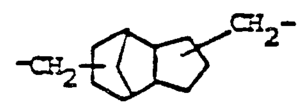 ou

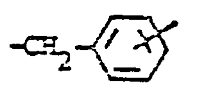 et

$X^{(-)}$ représente un anion,

et dans lesquelles les restes cycliques et acycliques cités peuvent à leur tour être substitués par des restes non ioniques ou cationiques habituels dans la chimie des colorants, et

A représente un reste alkylène en $C_2$-$C_6$ éventuellement ramifié, qui peut être interrompu par O ou S ou substitué par OH, ou bien les restes

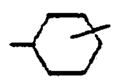

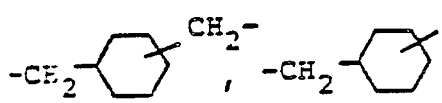 , 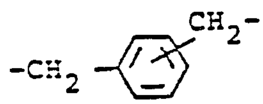

ou 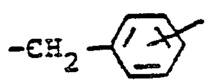

qui peuvent être substitués par alkyle en $C_1$-$C_4$.

3. Colorants de triphénodioxazines selon la revendication 1, répondant à la formule

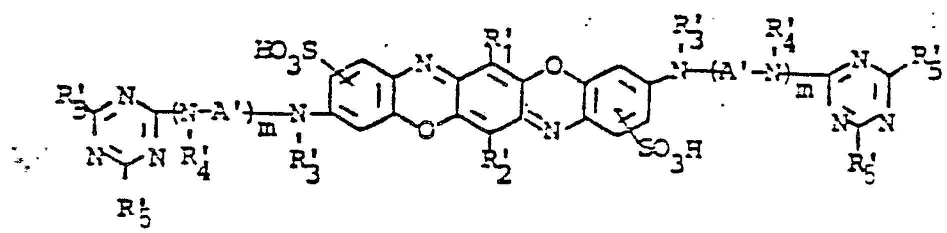

dans laquelle

$R_1'$ et $R_2'$ représentent l'hydrogène ou un halogène,

$R_3'$ et $R_4'$ représentent l'hydrogène ou alkyle en $C_1$-$C_4$ qui peut être substitué par OH ou sulfato et

A' représente un alkylène en $C_2$-$C_6$ éventuellement ramifié, qui peut être interrompu par O ou S ou substitué par OH, ou bien les restes

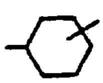 , 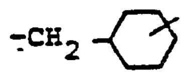 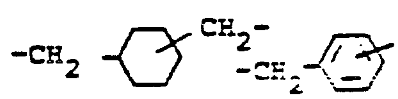

qui peuvent être substitués par alkyle en $C_1$-$C_4$, ou bien

$$-\underset{R'_4}{\underset{|}{N}}-A'-\underset{R'_3}{\underset{|}{N}}-$$

représente la pipérazine éventuellement substituée par alkyle en $C_1$-$C_4$,

$R_5'$ représente un reste de formule :

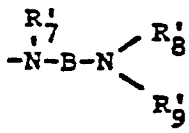
,
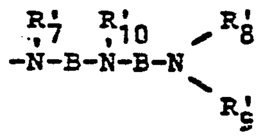

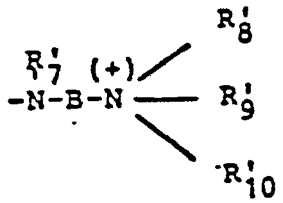 $X^{(-)}$ ou 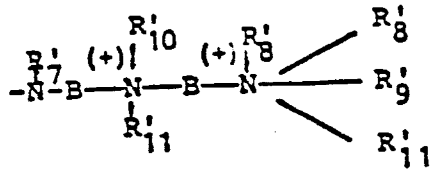

$2\ X^{(-)}$

$R_7'$-$R_{11}'$ représentent l'hydrogène, alkyle en $C_1$-$C_4$ éventuellement substitué par hydroxy, alcoxy en $C_1$-$C_4$, halogène, cyano, (alcoxy en $C_1$-$C_4$)-carbonyle ou (alkyle en $C_1$-$C_4$)-carbonyle et

$R_{11}'$ représente en outre benzyle ou phényléthyle éventuellement substitué par alkyle en $C_1$-$C_4$, hydroxy, alcoxy en $C_1$-$C_4$ ou halogène, et

B représente un reste alkylène en $C_2$-$C_6$, cyclohexylène, phénylène ou un reste de formules

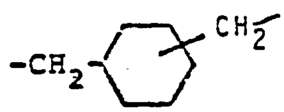, 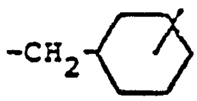 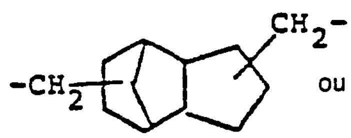 ou

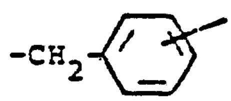 éventuellement substitué par alkyle en $C_1$-$C_4$, ou bien

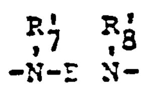 ou 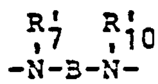 ou 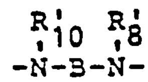

représentent un noyau pipérazine ou imidazolidine éventuellement substitué par alkyle en $C_1$-$C_4$, ou bien

$R_8'$—N—$R_9'$ représente un noyau pipéridine, morpholine, pipérazine ou pyrrolidine éventuellement substitué par alkyle en $C_1$-$C_4$ ou bien

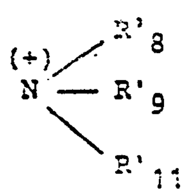

représente un reste pyridinium éventuellement substitué par alkyle en $C_1$-$C_4$ et

$X^{(-)}$ représente un anion, et

m est égal à 0 ou 1.

4. Colorants de triphénodioxazines selon la revendication 3, dans lesquels $R_1'$ et $R_2'$ représentent le chlore et $R_3'$ et $R_4'$ représentent l'hydrogène ou un reste alkyle en $C_1$-$C_4$.

5. Colorants de triphénodioxazines selon la revendication 1, de formules

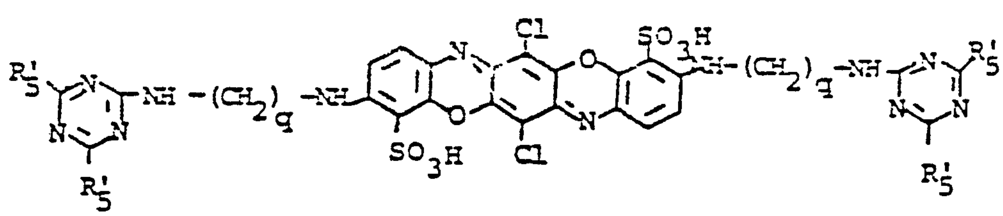

et

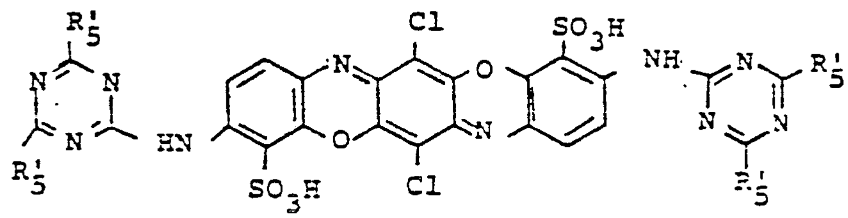

dans lesquelles

$R_5'$ a la signification indiquée à la revendication 3 et

q représente 2, 3 ou 4.

6. Colorants de triphénodioxazines selon la revendication 5, dans lesquels

$R_5'$ représente $—NH—(CH_2)_3—N(R_{12}')_2$

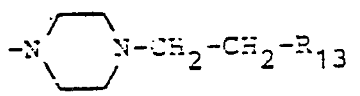

ou

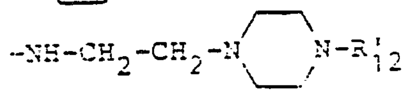

et les composés ammoniums de ces amines obtenus par quaternisation par $R_{11}''—X$,

$R_{11}''$ et $R_{12}'$ représentent l'hydrogène, méthyle ou éthyle,

$R_{13}$ représente OH ou $N(R_{12}')_2$ et

X représente un reste éliminable sous forme d'anion $X^{(-)}$.

7. Procédé pour la fabrication de colorants de triphénodioxazines selon la revendication 1, caractérisé en ce que l'on fait réagir des trihalogénotriazines de formule

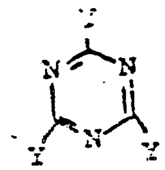

dans laquelle Y = F, Cl, Br avec des bases de colorants de formule

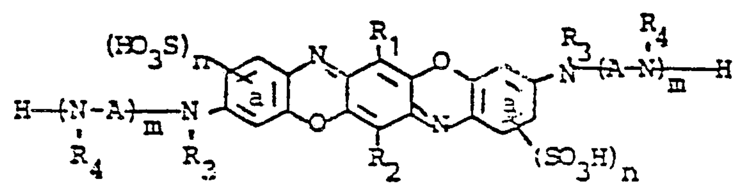

dans laquelle $R_1$, $R_2$, $R_3$, $R_4$, A, m et n ont la signification indiquée à la revendication 1, et avec des composés de formule $R_5—H$ dans laquelle $R_5$ a la signification indiquée à la revendication 1.

8. Utilisation des colorants de triphénodioxazines selon la revendication 1 pour la teinture de supports pouvant être teints par des colorants basiques, en particulier le papier.

9. Matière teinte ou imprimée avec les colorants de triphénodioxazines selon la revendication 1.